# EUROPEAN PATENT SPECIFICATION

(11) **EP 3 844 663 B1**
(45) Date of publication and mention of the grant of the patent: **02.07.2025**
(21) Application number: 19855552.6
(22) Date of filing: 30.07.2019
(51) Int. Cl.: G06K 7/10, G06K 19/06, G06V 20/20

(54) **SYSTEM AND METHOD FOR UNIQUE IDENTIFIER DETECTION BASED ON INVISIBLE LIGHT**
SYSTEM UND VERFAHREN ZUR ERKENNUNG EINES EINDEUTIGEN IDENTIFIKATORS BASIEREND AUF UNSICHTBAREM LICHT
SYSTÈME ET PROCÉDÉ DE DÉTECTION D'IDENTIFIANT UNIQUE BASÉ SUR UNE LUMIÈRE INVISIBLE

(30) Priority: 28.08.2018 US 201816115254
(43) Date of publication of application: 07.07.2021
(73) Proprietor: Intuit Inc., Mountain View, CA 94043 (US)
(72) Inventor: GABRIEL, Michael, Richard, Mountain View, CA 94043 (US)
(74) Representative: D Young & Co LLP
(86) International application number: PCT/US2019/044152
(87) International publication number: WO 2020/046519

(56) References cited:
- WO-A1-2015/072977
- WO-A1-2016/163653
- WO-A1-2017/117519
- WO-A1-2017/117519
- WO-A1-2020/040936
- CN-A- 1 312 513
- KR-A- 20160 005 529
- US-B2- 8 847 150
- US-B2- 9 524 622

## Description

### BACKGROUND

Augmented reality, mixed reality, virtual reality, and other forms of digital reality as discussed herein, or as known in the art at the time of filing, or as developed, or becomes available, after the time of filing, can include interaction with real objects. With augmented reality, a user may view real objects or representations of real objects and a display component may add digital information about one or more of the real objects. For example, a heads-up display on a jet fighter may add a distance indication near a viewed enemy aircraft. For further example, a golfer may point a camera of a smartphone at a flag of a hole on the green, and a representation of the flag may be displayed on the display of the smartphone with a distance indication of the golfer from the hole. With mixed reality, a user may view real-world objects alongside virtual objects. For example, goggles may display a representation of a real object, such as a table, as viewed through a front-facing camera and the goggles may add a digital image of a virtual object, such as a bottle resting on the table, and when the user reaches for the digital image of the bottle, nothing is actually present on the table. For further example, a user may view on a display of a smartphone a representation of a user's face, and a digital image of a moustache may be overlaid the representation of the user's face. With virtual reality, a user may view a created virtual world. For example, a user may wear a headset with a display and walk through a virtual maze, yet because the user is ambulatory, the user may bump into real objects in the user's actual environment, despite the fictional environment viewed through the headset.

In current augmented reality and mixed reality environments, it is desirable to identify real objects. Such identification is typically done using global positioning system (GPS) technology. For example, a user may desire to go to a restaurant and may point a camera of a smartphone at the storefront of the restaurant building. The smartphone may use GPS processing to determine the location of the camera and may use at least one accelerometer to determine the direction the camera is pointing. Such information may be used to determine the address of the building being viewed by the user through the camera. Using such GPS technology, the building may be identified based on a location database that records the locations of restaurants, and the smartphone may, for example, display a rating of the restaurant occupying the building based on the determined location of the building.

However, such identification of the location of an object is insufficient at least for mobile objects, small stationary objects near each other, and stationary objects not tracked in a location database. For example, a user may wish to eat from a food truck but wants to determine the quality of the mobile restaurant before ordering a meal. If the user points a smartphone's camera at the food truck, although the smartphone may be able to determine the physical location of the food truck, it is not possible to know which restaurant is being used by the food truck utilizing GPS because any food truck could be parked at that particular location on the street. The user must rely on inputting into the smartphone the name of the restaurant displayed on the food truck in order to acquire a review of the restaurant utilizing the food truck.

Using a visible identifier, such as a restaurant sign on a food truck that a user sees, may be undesirable for certain objects, such as objects that are desired to look identical to users. For example, an augmented reality or virtual reality racing game may involve real objects of toy cars or other action figures, and it is desirable for all of the toy cars to look identical to each other. In this example, each toy car may have the same physical features and identical coats of paint, such that a typical user is unable to distinguish representations of the toy cars on a display of a smartphone. Furthermore, if each toy car is a remote-control car, the movement of each car precludes identification through a smartphone's typical GPS technology of any one car. For further example, objects based on Internet of Things (IoT) may all desirably look identical in a user's home, where it is undesirable to have a visible identification marker such as a visible quick response code. For example, IoT floor lamps may be located in a user's living room, but may nevertheless need to be uniquely identifiable to control the lighting operations of each of the IoT lamps, where such IoT floor lamps are too proximate to each other to be identifiable using a smartphone's GPS technology.

Consequently, there is currently a significant need in the digital reality arts, such as augmented reality and mixed reality, to provide a system and method to uniquely identify real objects that are visually indistinguishable from each other.

WO 2017/117519 A1 provides systems and methods for optical narrowcasting for transmitting various types of content. WO 2020/040936 A1 provides a system and method for identifier detection based on invisible light, and may be considered prior art according to Article 54(3) EPC.

### SUMMARY

The invention is defined in the appended set of claims. Embodiments of the present disclosure provide a technical solution to the technical problem of uniquely identifying objects that are visually indistinguishable.

The disclosed technical solution includes providing a device and an object. In one embodiment, the device is an invisible light sensing device and the object is an invisible light emitting object. In one embodiment, the invisible light sensing device senses invisible light from a plurality of invisible light emitting objects in which each of the invisible light emitting objects emits invisible light in an identification pattern that is distinct from other identification patterns. In one embodiment, an identification pattern is based on a series of activations of the invisible light source and deactivations of the invisible light source. In one embodiment, the quantity of activations and the lengths of time of such activations form the identification pattern.

In one embodiment, the object has an invisible light source coupled to an object housing of the object. In one embodiment, an invisible light source is configured to emit invisible light. In one embodiment, invisible light is electromagnetic radiation that is undetectable by a normal human eye. In one embodiment, invisible light has a wavelength in the electromagnetic spectrum that is too short or too long to be detected by a normal human eye. In one embodiment, invisible light has a wavelength that is less than 380 nanometers (nm) or greater than 750 nm, which is nonvisible to an average human eye. In one embodiment, invisible light includes, but is not limited to, infrared light, ultraviolet light, radio wave, x-ray, gamma ray, and any other invisible electromagnetic radiation, as discussed herein, or as known in the art at the time of filing, or as developed, or becomes available, after the time of filing. In one embodiment, infrared light has a wavelength that is greater than 750 nm and less than 1 millimeter (mm).

In one embodiment, the object includes an object power supply that is coupled to the object housing and electronically coupled to the invisible light source. In one embodiment, the object includes an object control circuit that is coupled to the object housing, electronically coupled to the invisible light source, and electronically coupled to the object power supply. In one embodiment, the object control circuit supplies sequenced pulsing power from the object power supply to the invisible light source. In one embodiment, the sequenced pulsing power supplied by the object control circuit corresponds to the identification pattern. In one embodiment, the identification pattern is a series of activations of the invisible light source and deactivations of the invisible light source. In one embodiment, the length of time of activations and deactivations forms the identification pattern. For example, in one embodiment, the identification pattern represents a Morse code pattern of on-off switching of invisible light. In one embodiment, the identification pattern of one object is different from an identification pattern of any other object of the system.

In one embodiment, an opaque substrate is coupled to the object housing. In one embodiment, the opaque substrate defines an enclosure within which the invisible light source resides. In one embodiment, the opaque substrate is opaque to invisible light. In one embodiment, the invisible light source comprises an infrared light emitter and the opaque substrate is opaque to infrared light. In one embodiment, the opaque substrate defines an aperture configured to receive invisible light from the invisible light source enclosed by the opaque substrate. In one embodiment, invisible light from the invisible light source escapes the object through the aperture defined by the opaque substrate.

In one embodiment, the object includes a transparent substrate that is coupled to the opaque substrate. In one embodiment, the transparent substrate is transparent to invisible light. In one embodiment, the invisible light source emits infrared light and the transparent substrate is transparent to infrared light. In one embodiment, the transparent substrate provides a layer, such as a protective layer, over the aperture of the opaque substrate. In one embodiment, the transparent substrate is positioned as a barrier between the object's external environment and the enclosure formed, at least in part, by the opaque substrate. In one embodiment, the transparent substrate provides a layer, such as a protective layer, over the aperture that separates the enclosure from the object's surrounding environment. For example, the transparent substrate may prevent rain from leaking into the enclosure when the object is placed outdoors in rainy conditions.

In one embodiment, the device includes an invisible light sensor that is coupled to a device housing. In one embodiment, the device includes a device control circuit that is coupled to the device housing and electronically coupled to the invisible light sensor. In one embodiment, the invisible light sensor is configured to sense invisible light, such as invisible light emitted from an object. In one embodiment, an invisible light sensor is an invisible light detecting camera, an invisible light detector, an invisible light sensing cell, an invisible light absorber, an invisible light sensing LED, and any other invisible light sensors, as discussed herein, or as known in the art at the time of filing, or as developed, or becomes available, after the time of filing.

In one embodiment, the device control circuit detects the identification pattern of the invisible light sensed by the invisible light sensor. In one embodiment, the device control circuit detects information represented by the identification pattern. In one embodiment, the device control circuit determines an object unique identifier based on the detected identification pattern. For example, when an identification pattern represents a Morse code, the device control circuit may determine a unique serial number from the Morse code.

In one embodiment, the device includes a display component that is coupled to the device housing and electronically coupled to the device control circuit. In one embodiment, the display component provides to a user of the device a display to the user such as, but not limited to, an interface, an image, a hologram, an assistance resource, a background, an avatar, a highlighting mechanism, an icon, and any other displays that individually, or in combination, create a user experience, as discussed herein, or as known in the art at the time of filing, or as developed, or becomes available, after the time of filing.

In one embodiment, the display component displays the object unique identifier to a user. In one embodiment, the display component displays the detected identification pattern as an object unique identifier. In one embodiment, the display component displays a representation of the object and the detected identification pattern. In one embodiment, the display component displays a representation of the object and the object unique identifier that is positioned on the display in relation to the represented object. For example, if the object is a toy car, and the identification pattern is detected from the roof of the toy car, the display component shows the object unique identifier on the displayed representation of the roof of the toy car.

The disclosed technical solution includes providing a device and an object. In one example not within the scope of the claims, the device is an invisible light emitting and sensing device and the object is an invisible light reflecting object. In one embodiment, the device emits invisible light directed to a plurality of objects and senses reflected invisible light from the objects. The invisible light is emitted from an invisible light source of the device comprising one or more light emitters that emit invisible light. Each of the invisible light reflecting objects includes an invisible light reflective coating that reflects invisible light in an identification pattern that is distinct from other identification patterns.

In one example not within the scope of the claims, each object has an invisible light reflective coating coupled to an object housing of the object. An invisible light reflective coating is configured to reflect invisible light received from a light emitting device that emitted invisible light. In one embodiment, invisible light is electromagnetic radiation that is undetectable by a normal human eye. In one embodiment, invisible light has a wavelength in the electromagnetic spectrum that is too short or too long to be detected by a normal human eye. In one embodiment, invisible light has a wavelength that is less than 380 nanometers (nm) or greater than 750 nm, which is nonvisible to an average human eye. In one embodiment, invisible light includes, but is not limited to, infrared light, ultraviolet light, radio wave, x-ray, gamma ray, and any other invisible electromagnetic radiation, as discussed herein, or as known in the art at the time of filing, or as developed, or becomes available, after the time of filing. In one embodiment, infrared light has a wavelength that is greater than 750 nm and less than 1 millimeter (mm).

In one example not within the scope of the claims, the object includes an invisible light reflective coating coupled to the object. In one embodiment, the invisible light reflective coating is coupled to an adhesive tag that is adhesively coupled to the object. In one embodiment, the invisible light reflective coating forms a coating design that represents an identification pattern. In one embodiment, the identification pattern represents an information code, such as a bar code, a quick response (QR) code, and other information codes as discussed herein, or as known in the art at the time of filing, or as developed, or becomes available, after the time of filing.

In one embodiment, the device includes an invisible light sensor that is coupled to a device housing. In one embodiment, the device includes a device control circuit that is coupled to the device housing and electronically coupled to the invisible light sensor. In one embodiment, the invisible light sensor is configured to sense invisible light, such as invisible light reflected from an object. In one embodiment, an invisible light sensor is an invisible light detecting camera, an invisible light detector, an invisible light sensing cell, an invisible light absorber, an invisible light sensing LED, and any other invisible light sensors, as discussed herein, or as known in the art at the time of filing, or as developed, or becomes available, after the time of filing.

In one example not within the scope of the claims, the device control circuit detects the identification pattern of the reflected invisible light sensed by the invisible light sensor. In one embodiment, the device control circuit detects information represented by the identification pattern. In one embodiment, the device control circuit determines an object unique identifier based on the detected identification pattern. For example, when an identification pattern represents a QR code, the device control circuit may determine a unique serial number from the QR code. In one example not within the scope of the claims, the invisible light source of the device comprises an infrared light emitter and the invisible light reflective coating of the object comprises infrared light reflecting ink.

In one embodiment, the device includes a display component that is coupled to the device housing and electronically coupled to the device control circuit. In one embodiment, the display component provides to a user of the device a display to the user such as, but not limited to, an interface, an image, a hologram, an assistance resource, a background, an avatar, a highlighting mechanism, an icon, and any other displays that individually, or in combination, create a user experience, as discussed herein, or as known in the art at the time of filing, or as developed, or becomes available, after the time of filing.

In one embodiment, the display component displays the object unique identifier to a user. In one embodiment, the display component displays the detected identification pattern as an object unique identifier. In one embodiment, the display component displays a representation of the object and the detected identification pattern. In one embodiment, the display component displays a representation of the object and the object unique identifier that is positioned on the display in relation to the represented object. For example, if the object is a toy car, and the identification pattern is detected from the roof of the toy car, the display component shows the object unique identifier on the displayed representation of the roof of the toy car.

### BRIEF DESCRIPTION OF THE DRAWINGS

FIG. 1 is a pictorial diagram of a unique identifier detection system, in accordance with one embodiment.
FIG. 2 is a pictorial diagram of a unique identifier detection system.
FIG. 3 is a block diagram of a unique identifier detection system, in accordance with one embodiment.
FIG. 4 is a block diagram of a unique identifier detection system.
FIG. 5 illustrates an example perspective view of an example object of a unique identifier detection system, in accordance with one embodiment.
FIG. 6 illustrates an example perspective view of an example object of a unique identifier detection system.
FIG. 7 is a schematic cross-section of an example object of a unique identifier detection system, in accordance with one embodiment.
FIG. 8 is a schematic cross-section of an example object of a unique identifier detection system.
FIG. 9 illustrates an example identification pattern of a unique identifier detection system, in accordance with one embodiment.
FIG. 10 illustrates an example identification pattern of a unique identifier detection system.
FIG. 11 is a flow diagram of a process for unique identifier detection, in accordance with one embodiment.
FIG. 12 is a flow diagram of a process for unique identifier detection.
FIG. 13 is a block diagram of an apparatus of a unique identifier detection system, in accordance with one embodiment.

Common reference numerals are used throughout the figures and the detailed description to indicate like elements. One skilled in the art will readily recognize that the above figures are examples and that other architectures, modes of operation, orders of operation, and elements/functions can be provided and implemented without departing from the characteristics and features of the invention, as set forth in the claims.

### DETAILED DESCRIPTION

Embodiments will now be discussed with reference to the accompanying figures, which depict one or more exemplary embodiments. Embodiments may be implemented in many different forms and should not be construed as limited to the embodiments set forth herein, shown in the figures, and/or described below. Rather, these exemplary embodiments are provided to allow a complete disclosure that conveys the principles of the invention, as set forth in the claims, to those of skill in the art.

### OVERVIEW

As discussed in more detail below, embodiments of the present disclosure represent a technical solution to the technical problem of uniquely identifying objects that are visually indistinguishable. In one embodiment, an invisible light sensing device senses invisible light from a plurality of invisible light emitting objects, in which each of the invisible light emitting objects emits invisible light in an identification pattern that is distinct from other identification patterns. In one embodiment, an identification pattern is based on sequenced pulsing invisible light emission to form an identification pattern. In one embodiment, the invisible light sensing device senses the emitted invisible light and detects the identification pattern associated with the respective invisible light emitting object.

In one embodiment, an invisible light sensing device senses invisible light from a plurality of invisible light reflecting objects, in which each of the invisible light reflecting objects reflects invisible light in an identification pattern that is distinct from other identification patterns. In one embodiment, an identification pattern is based on an invisible light reflective coating applied to each invisible light reflecting object, and the invisible light reflective coating conforms to the respective identification pattern. In one embodiment, the invisible light sensing device emits invisible light, senses the reflected invisible light, and detects the identification pattern associated with the respective invisible light reflecting object.

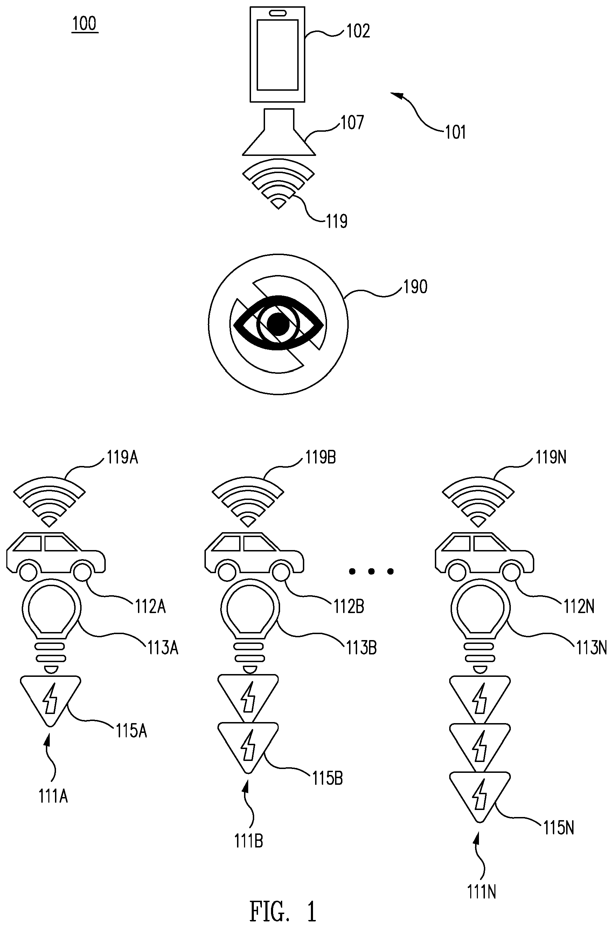

FIG. 1 is a pictorial diagram of a unique identifier detection system 100, in accordance with one embodiment. As depicted in the embodiment of FIG. 1, there is a device 101 that includes a device housing 102 and an invisible light sensor 107. It is to be understood that the device housing 102 is not limited to the graphic depicted in FIG. 1, as it is depicted for illustrative purposes. In one embodiment, the form of the device housing 102 is any invisible light detecting device housing, such as a camera, a smartphone, smart glasses, a headset, and any other invisible light detecting device housing, as discussed herein, or as known in the art at the time of filing, or as developed, or becomes available, after the time of filing. It is also to be understood that the invisible light sensor 107 is not limited to the graphic depicted in FIG. 1, as it is depicted for illustrative purposes. For example, the invisible light sensor 107 may be attached internally to the device housing 102, externally to the device housing 102, or any other integral attachment, as discussed herein, or as known in the art at the time of filing, or as developed, or becomes available, after the time of filing.

As depicted in the embodiment of FIG. 1, there is a plurality of objects 111A and 111B through 111N, and it is to be understood that there may be any number of such objects. In one embodiment, the objects 111A and 111B through 111N are any objects that are identifiable such as toys, household goods, office wares, operational items, manufacturing materials, and any other objects, as discussed herein, or as known in the art at the time of filing, or as developed, or becomes available, after the time of filing.

As depicted in the embodiment of FIG. 1, the objects 111A and 111B through 111N include object housings 112A and 112B through 112N. It is to be understood that the object housings 112A and 112B through 112N are not limited to the graphics depicted in FIG. 1, as they are depicted for illustrative purposes. In one embodiment, the form of the object housings 112A and 112B through 112N are any object forms that are visually indistinguishable. For example, FIG. 1 depicts a first object housing 112A having a form of a toy car and a second object housing 112B also having a form of a toy car. In this example, the two toy cars may be of the same model type or may have the same body paint. It is to be understood that the first object housing 112A and the second object housing 112B may have imperceptible variations that are not perceivable by a normal human eye.

In contrast, in a traditional environment, a perceptible variation would be the application of a visible bar code to the roof of each toy car in which the visible bar code itself is traditionally black bars applied to a white background. Although such visible bar codes would make each object housing 112A and 112B through 112N uniquely identifiable, such would interfere with the aesthetic nature of each object housing 112A and 112B through 112N, causing each object 111A and 111B through 111N to be visually unappealing. For example, visible bar codes placed on the roofs of toy cars of a racing game would typically be a distraction from the playing experience for players of the game. It is to be understood that in some embodiments, the objects have perceptible variations, such as different body paint of a toy car or a different feature of a toy car body. In such examples, the perceptible variations are not a distraction.

As depicted in the embodiment of FIG. 1, the objects 111A and 111B through 111N include invisible light sources 113A and 113B through 113N. It is to be understood that the invisible light sources 113A and 113B through 113N are not limited to the graphics depicted in FIG. 1, as they are depicted for illustrative purposes. For example, the invisible light sources 113A and 113B through 113N may be attached internally to the object housings 112A and 112B through 112N, externally to the object housings 112A and 112B through 112N, or any other integral attachment, as discussed herein, or as known in the art at the time of filing, or as developed, or becomes available, after the time of filing.

Although FIG. 1 depicts the invisible light sources 113A and 113B through 113N beneath the object housings 112A and 112B through 112N, in one embodiment, the object housings 112A and 112B through 112N form cavities within which the invisible light sources 113A and 113B through 113N are housed. In one embodiment, the invisible light sources 113A and 113B through 113N emit light that conforms to the invisible light spectrum, as discussed herein, or as known in the art at the time of filing, or as developed, or becomes available, after the time of filing. In one embodiment, the invisible light sources 113A and 113B through 113N are light emitting diodes. In one embodiment, the invisible light sources 113A and 113B through 113N are lasers. In one embodiment, the invisible light sources 113A and 113B through 113N are semiconductor lasers.

As depicted in the embodiment of FIG. 1, the objects 111A and 111B through 111N include object control circuits 115A and 115B through 115N. It is to be understood that the object control circuits 115A and 115B through 115N are not limited to the graphics depicted in FIG. 1, as they are depicted for illustrative purposes. In one embodiment, the object control circuits 115A and 115B through 115N supply pattern power to the invisible light sources 113A and 113B through 113N. In one embodiment, pattern power corresponds to respective identification patterns. In one embodiment, an identification pattern comprises optical communication signals and the corresponding pattern power comprises optical communication signaling power. In one embodiment, an identification pattern comprises sequenced pulsing invisible light emission and the corresponding pattern power comprises sequenced pulsing power. For example, the object control circuits 115A and 115B through 115N may supply power to the invisible light sources 113A and 113B through 113N such that the invisible light sources 113A and 113B through 113N flash invisible light on and off in an identification pattern.

It is to be understood that although the object control circuits 115A and 115B through 115N are depicted as power pulses, such is for illustrative purposes. FIG. 1 depicts an embodiment of the object control circuits 115A and 115B through 115N each supplying power pulses to the invisible light sources 113A and 113B through 113N in a unique identification pattern, and the pictorial representations of FIG. 1 are not to be considered limiting. As depicted in FIG. 1 for illustrative purposes, the object control circuit 115A depicts supplying one power pulse, the object control circuit 115B depicts supplying two power pulses, and the object control circuit 115N depicts supplying three power pulses, which illustrates that each of the object control circuits 115A and 115B through 115N supplies different sequenced pulsing power in relation to each other. In one embodiment, an identification pattern corresponds to sequenced pulsing invisible light emission that is emitted based on the respective sequenced pulsing power. For example, an identification pattern may comprise a short flash of invisible light followed by two long flashes of invisible light followed by a short flash of invisible light.

Although not depicted in the embodiment of FIG. 1, the objects 111A and 111B through 111N may include opaque substrates. In one embodiment, the opaque substrates may be attached to the object housings 112A and 112B through 112N. For example, the object housings 112A and 112B through 112N may have the form of toy cars without roofs and the opaque substrates may have the form of roofs attached to the toy cars. In one embodiment, the opaque substrates are moldable to form a three-dimensional substrate.

In one embodiment, the opaque substrates are formed, at least in part, from material that is opaque to the invisible light emitted by the invisible light sources 113A and 113B through 113N. For example, if the invisible light sources 113A and 113B through 113N emit infrared light, then the opaque substrates may be opaque to that infrared light, such that the emitted infrared light may not pass through the material of the opaque substrates. In one embodiment, the opaque substrates are formed to each define apertures through which the emitted light of the invisible light emitters 113A and 113B through 113N can pass.

As depicted in the embodiment of FIG. 1, invisible light 119A and 119B through 119N is emitted by the invisible light sources 113A and 113B through 113N having corresponding identification patterns based on sequenced pulsing invisible light emission. It is to be understood that the invisible light 119A and 119B through 119N are not limited to the graphics depicted in FIG. 1, as they are depicted for illustrative purposes. In one embodiment, the identification pattern of first invisible light 119A includes one pulse of invisible light emission, the identification pattern of second invisible light 119B includes two pulses of invisible light emission, and the identification pattern of third invisible light 119N includes three pulses of invisible light emission.

As depicted in the embodiment of FIG. 1, the invisible light 119A and 119B through 119N is not visible to a normal human eye 190. In one embodiment, although the invisible light 119A and 119B through 119N is emitted into the environment, it is not noticeable to users of the device 101 who are in the environment. For example, a digital reality game may be played with the objects 111A and 111B through 111N, and if the invisible light 119A and 119B through 119N is infrared light, then the infrared light is not visible to the players of the game and the players are not distracted by the infrared light as they play a digital reality game.

As depicted in the embodiment of FIG. 1, the invisible light 119 is received by the invisible light sensor 107 of the device 101. It is to be understood that the invisible light 119 being sensed by the invisible light sensor 107 is not limited to the graphic depicted in FIG. 1, as it is depicted for illustrative purposes. For example, the invisible light 119 may have originated from any one of the objects 111A and 111B through 111N as the emitted invisible light 119A and 119B through 119N, where each is formed with a respective identification pattern.

In one embodiment, the invisible light sensor 107 of the device 101 senses the invisible light 119A and 119B through 119N in parallel, sensing such at the same time. In one embodiment, the invisible light sensor 107 of the device 101 senses the invisible light 119A and 119B through 119N in serial, sensing such at different times. In one embodiment, the invisible light sensor 107 of the device 101 senses the invisible light 119A and 119B through 119N in any combination of parallel and serial sensing, such as when some light is sensed concurrently and other light is sensed non-concurrently. It is to be understood that, in some embodiments, the invisible light sensor 107 senses both invisible light and visible light. For example, an invisible light sensor 107 of a smartphone may be a camera that can sense both infrared light and visible light of an object.

Although not shown in FIG. 1, a device control circuit of the device 101 can detect the identification patterns of the invisible light 119A and 119B through 119N and determine unique identifiers based on the detected identification patterns. For example, a first identification pattern of the invisible light 119A may be determined by the device control circuit to be represented by the number "one," a second identification pattern of invisible light 119B may be determined by the device control circuit to be represented by the number "two," and a third identification pattern of invisible light 119N may be determined by the device control circuit to be represented by the number "three." In this example, the device 101 may determine unique identifiers respectively of numbers "one" and "two" for the two objects 111A and 111B based on the respective emitted invisible light 119A and 119B.

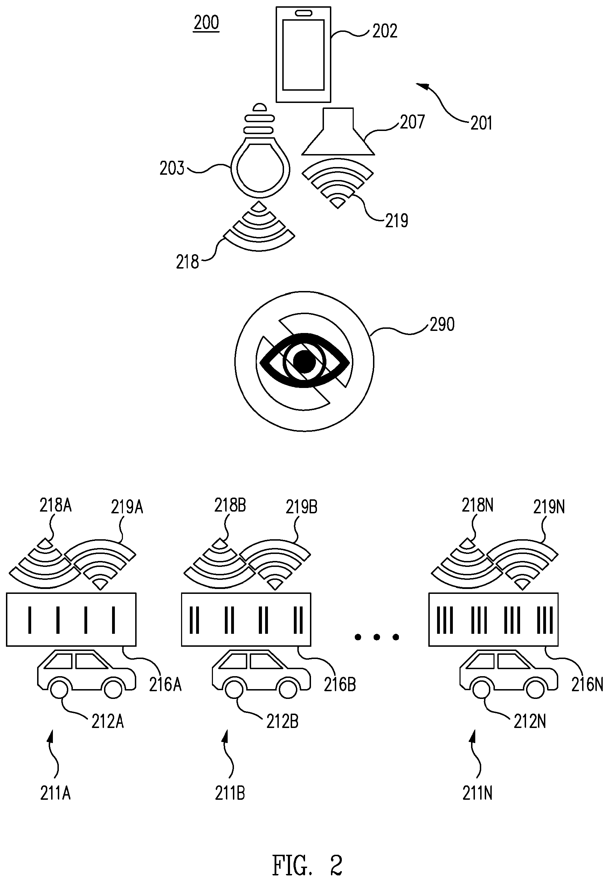

FIG. 2 is a pictorial diagram of a unique identifier detection system 200, in accordance with one embodiment. As depicted in the embodiment of FIG. 2, there is a device 201 that includes a device housing 202, an invisible light sensor 207, and an invisible light source 203. It is to be understood that the device housing 202 is not limited to the graphic depicted in FIG. 2, as it is depicted for illustrative purposes. In one embodiment, the form of the device housing 202 is any invisible light detecting device housing, such as a camera, a smartphone, smart glasses, a headset, and any other invisible light detecting device housing, as discussed herein, or as known in the art at the time of filing, or as developed, or becomes available, after the time of filing.

As depicted in the embodiment of FIG. 2, the device 201 includes an invisible light sensor 207. It is to be understood that the invisible light sensor 207 is not limited to the graphic depicted in FIG. 2, as it is depicted for illustrative purposes. For example, the invisible light sensor 207 may be attached internally to the device housing 202, externally to the device housing 202, or any other integral attachment, as discussed herein, or as known in the art at the time of filing, or as developed, or becomes available, after the time of filing.

As depicted in the embodiment of FIG. 2, the device 201 includes an invisible light source 203. It is to be understood that the invisible light source 203 is not limited to the graphic depicted in FIG. 2, as it is depicted for illustrative purposes. For example, the invisible light source 203 may be attached internally to the device housing 202, externally to the device housing 202, or any other integral attachment, as discussed herein, or as known in the art at the time of filing, or as developed, or becomes available, after the time of filing. Although FIG. 2 depicts an invisible light source 203 and an invisible light sensor 207 as separate components, it is to be understood that in some embodiments, such components are a single component. For example, the device 201 may include a light emitting diode (LED) that acts both as an invisible light source 203 and as an invisible light sensor 207.

In one embodiment, the invisible light source 203 emits light that conforms to the invisible light spectrum, as discussed herein, or as known in the art at the time of filing, or as developed, or becomes available, after the time of filing. In one embodiment, the invisible light source 203 is a light emitting diode. In one embodiment, the invisible light source 203 is a laser. In one embodiment, the invisible light source 203 is a semiconductor laser.

In one embodiment, the device 201 is configured to activate the invisible light source 203 to emit the emitted invisible light 218 and to concurrently activate the invisible light sensor 207 to sense the reflected invisible light 219. In one embodiment, there are two devices 201, in which the first device 201 comprises the invisible light source 203 and the second device 201 comprises the invisible light sensor 207. In this embodiment such a first device 201 and a second device 201 are communicatively coupled, such that the first device 201 activates the invisible light source 203 to emit the emitted invisible light 218 concurrently when the second device 201 activates the invisible light sensor 207 to sense the reflected invisible light 219.

As depicted in the embodiment of FIG. 2, there is a plurality of objects 211A and 211B through 211N, and it is to be understood that there may be any number of such objects. In one embodiment, the objects 211A and 211B through 211N are any objects that are identifiable such as toys, household goods, office wares, operational items, manufacturing materials, and any other objects, as discussed herein, or as known in the art at the time of filing, or as developed, or becomes available, after the time of filing.

As depicted in the embodiment of FIG. 2, the objects 211A and 211B through 211N include object housings 212A and 212B through 212N. It is to be understood that the object housings 212A and 212B through 212N are not limited to the graphics depicted in FIG. 2, as they are depicted for illustrative purposes. In one embodiment, the form of the object housings 212A and 212B through 212N are any object forms that are visually indistinguishable. For example, FIG. 2 depicts a first object housing 212A having a form of a toy car and a second object housing 212B also having a form of a toy car. In this example, the two toy cars may be of the same model type or may have the same body paint. It is to be understood that the first object housing 212A and the second object housing 212B may have imperceptible variations that are not perceivable by a normal human eye.

In contrast, in a traditional environment, a perceptible variation would be the application of a visible bar code to the roof of each toy car in which the visible bar code itself is traditionally black bars applied to a white background. Although such visible bar codes would make each object housing 212A and 212B through 212N uniquely identifiable, such would interfere with the aesthetic nature of each object housing 212A and 212B through 212N, causing each object 211A and 211B through 211N to be visually unappealing. For example, visible bar codes placed on the roofs of toy cars of a racing game would typically be a distraction from the playing experience for players of the game. It is to be understood that in some embodiments, the objects have perceptible variations, such as different body paint of a toy car or a different feature of a toy car body. In such examples, the perceptible variations are not a distraction.

As depicted in the embodiment of FIG. 2, the objects 211A and 211B through 211N include invisible light reflective coatings 216A and 216B through 216N. It is to be understood that the invisible light reflective coatings 216A and 216B through 216N are not limited to the graphics depicted in FIG. 2, as they are depicted for illustrative purposes. In one embodiment, the invisible light reflective coatings 216A and 216B through 216N may be adhered to the object housings 212A and 212B through 212N. For example, the object housings 212A and 212B through 212N may have the form of toy cars with roofs and the invisible light reflective coatings 216A and 216B through 216N may be attached to the roofs of the toy cars.

In one embodiment, the invisible light reflective coating 216A and 216B through 216N are formed, at least in part, from material that is reflective to the invisible light emitted by the invisible light source 203. For example, if the invisible light source 203 emits infrared light, then the invisible light reflective coatings 216A and 216B through 216N may be reflective to that infrared light, such that the reflected infrared light is reflected from the material of the invisible light reflective coatings 216A and 216B through 216N. In one embodiment, the invisible light reflective coatings 216A and 216B through 216N comprise invisible light reflective ink. In one embodiment, invisible light reflective ink is a fluid carrier that carries invisible light reflective pigment.

In one embodiment, the object housings 212A and 212B through 212N are formed, at least in part, from material that is not reflective to the invisible light emitted by the invisible light source 203. In one embodiment, the object housings 212A and 212B through 212N are formed, at least in part, from material that disburses the invisible light emitted by the invisible light source 203. In one embodiment, the object housings 212A and 212B through 212N are formed, at least in part, from material that scatters the invisible light emitted by the invisible light source 203. In one embodiment, the object housings 212A and 212B through 212N are formed, at least in part, from material that absorbs the invisible light emitted by the invisible light source 203. In one embodiment, the invisible light reflective coatings 216A and 216B through 216N reflect invisible light emitted by the invisible light source 203 without interference from ambient invisible light reflection from the object housings 212A and 212B through 212N.

In one embodiment, the invisible light reflective coatings 216A and 216B through 216N are formed to have a unique design. It is to be understood that although the invisible light reflective coatings 216A and 216B through 216N are depicted as bar codes, such is for illustrative purposes. FIG. 2 depicts an embodiment of the invisible light reflective coatings 216A and 216B through 216N each having one or more bars that form a unique coating design, and the pictorial representations of FIG. 2 are not to be considered limiting. As depicted in FIG. 2 for illustrative purposes, the coating design of a first invisible light reflective coating 216A depicts a plurality of single bars, the coating design of a second invisible light reflective coatings 216B depicts a plurality of double bars, and the coating design of a third invisible light reflective coating 216N depicts a plurality of triple bars.

As depicted in the embodiment of FIG. 2, the emitted invisible light 218 is emitted by the invisible light source 203. In one embodiment, the emitted invisible light 218 is received as the respective emitted invisible light 218A and 218B through 218N by the respective invisible light reflective coatings 216A and 216B through 216N. It is to be understood that the emitted invisible light 218A and 218B through 218N is not limited to the graphics depicted in FIG. 2, as they are depicted for illustrative purposes.

As depicted in the embodiment of FIG. 2, reflected invisible light 219A and 219B through 219N is reflected by the invisible light reflective coatings 216A and 216B through 216N having respective coating designs. In one embodiment, the reflected invisible light 219A and 219B through 219N is a reflection of the respective emitted invisible light 218A and 218B through 218N. In one embodiment, the reflected invisible light 219A and 219B through 219N is formed into identification patterns based on the respective coating designs of the invisible light reflective coatings 216A and 216B through 216N. It is to be understood that the reflected invisible light 219A and 219B through 219N is not limited to the graphics depicted in FIG. 2, as they are depicted for illustrative purposes. In one embodiment, the identification pattern of first reflected invisible light 219A includes invisible light emission of a plurality of single bars, the identification pattern of second reflected invisible light 219B includes invisible light emission of a plurality of double bars, and the identification pattern of third reflected invisible light 219N includes invisible light emission of a plurality of triple bars.

As depicted in the embodiment of FIG. 2, the reflected invisible light 219A and 219B through 219N is not visible to a normal human eye 290. In one embodiment, although the reflected invisible light 219A and 219B through 219N is reflected into the environment, it is not noticeable to users of the device 201 who are in the environment. For example, a digital reality game may be played with the objects 211A and 211B through 211N, and if the reflected invisible light 219A and 219B through 219N is infrared light, then the infrared light is not visible to the players of the game and the players are not distracted by the infrared light as they play a digital reality game. Similarly, the emitted invisible light 218A and 218B through 218N is not visible to a normal human eye 290 as discussed for the reflected invisible light 219A and 219B through 219N.

As depicted in the embodiment of FIG. 2, the reflected invisible light 219 is received by the invisible light sensor 207 of the device 201. It is to be understood that the reflected invisible light 219 being sensed by the invisible light sensor 207 is not limited to the graphic depicted in FIG. 2, as it is depicted for illustrative purposes. For example, the reflected invisible light 219 may have originated from any one of the objects 211A and 211B through 211N as the reflected invisible light 219A and 219B through 219N, where each is formed with a respective identification pattern.

In one embodiment, the invisible light sensor 207 of the device 201 senses the reflected invisible light 219A and 219B through 219N in parallel, sensing such at the same time. In one embodiment, the invisible light sensor 207 of the device 201 senses the reflected invisible light 219A and 219B through 219N in serial, sensing such at different times. In one embodiment, the invisible light sensor 207 of the device 201 senses the reflected invisible light 219A and 219B through 219N in any combination of parallel and serial sensing, such as when some light is sensed concurrently and other light is sensed non-concurrently. It is to be understood that, in some embodiments, the invisible light sensor 207 senses both invisible light and visible light. For example, an invisible light sensor 207 of a smartphone may be a camera that can sense both infrared light and visible light of an object.

Although not shown in FIG. 2, a device control circuit of the device 201 can detect the identification patterns of the reflected invisible light 219A and 219B through 219N and determine unique identifiers based on the detected identification patterns. For example, a first identification pattern of the reflected invisible light 219A may be determined by the device control circuit to be represented by the number "one," a second identification pattern of reflected invisible light 219B may be determined by the device control circuit to be represented by the number "two," and a third identification pattern of reflected invisible light 219N may be determined by the device control circuit to be represented by the number "three." In this example, the device 201 may determine unique identifiers respectively of numbers "one" and "two" for the two objects 211A and 211B based on the respective reflected invisible light 219A and 219B.

Embodiments of the present disclosure provide highly efficient, effective, and versatile systems and methods for uniquely identifying objects that are visually indistinguishable. However, the disclosed embodiments do not encompass, embody, or preclude other forms of innovation in the area of object identification systems and methods.

In addition, the disclosed embodiments of systems and methods for uniquely identifying tangible objects that are visually indistinguishable are not abstract ideas for at least several reasons.

First, the disclosed systems and methods for uniquely identifying tangible objects that are visually indistinguishable are not abstract ideas because they are not merely an idea itself (e.g., can be performed mentally or using pen and paper). For example, it is not possible for the human eye to see invisible light that is in a light spectrum that the human eye cannot detect. Accordingly, the human mind cannot comprehend the identification pattern of the invisible light, even with pen and paper to assist the human mind. In contrast, the disclosed embodiments utilize an invisible light sensor to sense invisible light having an identification pattern that was emitted or reflected from an object and to uniquely identify the object based on the sensed invisible light.

Second, the disclosed systems and methods for uniquely identifying tangible objects that are visually indistinguishable are not abstract ideas because they are not a fundamental economic practice (e.g., are not merely creating a contractual relationship, hedging, mitigating a settlement risk, etc.). In contrast, the disclosed embodiments provide for determining a unique identifier based on an identification pattern of invisible light sensed by an invisible light sensor, which provides an improved experience for users of a device interacting with a plurality of objects.

Third, the disclosed systems and methods for uniquely identifying tangible objects that are visually indistinguishable are not abstract ideas because they are not a method of organizing human activity (e.g., managing a game of bingo), but are rather, in one embodiment, tools for enabling the detection of visually indistinguishable objects that may be utilized by human activity. For example, if the human activity is a racing game, and the objects being utilized are toy cars that emit or reflect invisible light having identification patterns of the respective toy cars, the racing game is enhanced. That enhancement is independent of a method for organizing the human activity of a racing game.

Fourth, although mathematics may be used in the disclosed systems and methods for uniquely identifying tangible objects that are visually indistinguishable, the disclosed and claimed systems and methods are not abstract ideas because they are not simply a mathematical relationship/formula. In contrast, the disclosed embodiments provide for determining a unique identifier from an identification pattern of emitted or reflected invisible light. This results in the tangible effect of the identification of visually indistinguishable objects that exist in the physical environment of a user of an invisible light sensing device.

### EXEMPLARY ENVIRONMENT

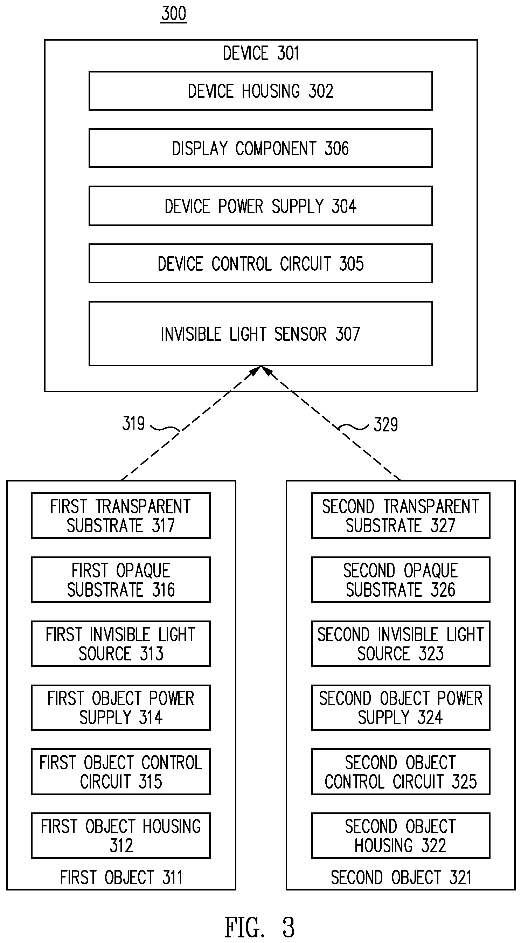

FIG. 3 is a functional block diagram of a unique identifier detection system 300, in accordance with one embodiment. It is to be understood that certain elements of FIG. 1 correspond to respective elements of FIG. 3 and may be used interchangeably when referring to FIGS. 1 and 3. Referring to FIGS. 1 and 3 together, the object 111A of FIG. 1 corresponds to the first object 311 of FIG. 3, the object 111B of FIG. 1 corresponds to the second object 321 of FIG. 3, and the device 101 of FIG. 1 corresponds to the device 301 of FIG. 3. It is to be understood that, although only a first object 311 and a second object 321 are depicted in FIG. 3, collectively they correspond to the plurality of objects 111A and 111B through 111N of FIG. 1. It is to be understood that although a Nth object is not depicted in FIG. 3, as it is in FIG. 1, the first object 311 and the second object 321 can collectively represent any number of objects, such as any number of objects that are visually indistinguishable.

Referring to FIG. 3, the unique identifier detection system 300 includes a device 301, a first object 311, and a second object 321. In one embodiment, the first object 311 includes a first object housing 312. For example, the first object housing 312 may be considered the body of the first object 311. In one embodiment, a first invisible light source 313 is coupled to the first object housing 312. For example, a first object housing 312 may be a toy car without an engine hood, and the first invisible light source 313 may reside in the engine compartment of the toy car, where an actual engine would reside in an actual car. In one embodiment, the first object housing 312 is opaque to the invisible light emitted by the first invisible light source 313.

In one embodiment, the first object 311 includes a first object power supply 314 that is coupled to the first object housing 312. In one embodiment, the first object power supply 314 is electronically coupled to the first invisible light source 313 to activate the first invisible light source 313 to emit invisible light.

In one embodiment, the first object 311 includes a first object control circuit 315 coupled to the first object housing 312. In one embodiment, the first object control circuit 315 is electronically coupled to the first object power supply 314 and electronically coupled to the first invisible light source 313. In one embodiment, the first object control circuit 315 activates the first invisible light source 313 to emit invisible light.

In one embodiment, the first object control circuit 315 supplies first pattern power from the first object power supply 314 to the first invisible light source 313. In one embodiment, the first pattern power corresponds to the first identification pattern. In one embodiment, the first pattern power comprises first sequenced pulsing power. In one embodiment, the first identification pattern comprises first sequenced pulsing invisible light emission. In one embodiment, first sequenced pulsing invisible light emission comprises a plurality of pulses of invisible light, in which each pulse has a duration over time. In this embodiment, each pulse of invisible light is based on a corresponding supply of sequenced pulsing power for a corresponding duration over time. For example, a first pulse may be one second, a second pulse may be two seconds, a third pulse may be one second, and a fourth pulse may be two seconds. For further example, a first pulse may be two seconds, a second pulse may be two seconds, a third pulse may be one second, and a fourth pulse may be one second. It is to be understood that the duration of pauses between each pulse may have a pattern as well.

In one embodiment, the first pattern power comprises first optical communication signaling power. In one embodiment, the first identification pattern comprises first optical communication signals. For example, first optical communication signals may be based on invisible light intensity modulation (IM) in which the power output of the object control circuit 315 is varied in accordance with characteristics of the modulating signal. In one embodiment, the first communication signals utilize wavelength division multiplexing (WDM), optical frequency-division multiplexing (OFDM), and other multiplexing techniques, as discussed herein, or as known in the art at the time of filing, or as developed, or becomes available, after the time of filing.

In one embodiment, the first object 311 includes a first opaque substrate 316 that is coupled to the first object housing 312. In one embodiment, the first opaque substrate 316 is made from a material that is opaque to the invisible light emitted by the first invisible light source 313. In one embodiment, the first opaque substrate 316 forms an enclosure within which the first invisible light source 313 resides. In one embodiment, the first opaque substrate 316 coupled with the first object housing 312 collectively form an enclosure within which the first invisible light source 313 resides.

For example, a first object housing 312 may be a toy car without an engine hood, and the first invisible light source 313 may be housed in the engine compartment of the toy car, where an actual engine would be housed in an actual car. In this example, the first object housing 312 and the first opaque substrate 316 are opaque to the invisible light emitted by the first invisible light source 313. In this example, the first opaque substrate 316 is shaped to be an engine hood that is compatible to the first object housing 312, and the first opaque substrate 316 is coupled to the first object housing 312 to form an enclosure resembling an engine compartment in which the first invisible light source 313 resides. In this example, when the first invisible light source 313 is activated, such as when the first invisible light source 313 is activated by the first object control circuit 315 supplying power from the first object power supply 314, the emitted invisible light emitted from the first invisible light source 313 cannot penetrate the opaque materials of the first opaque substrate 316 and the first object housing 312.

It is to be understood that the example of placing the first invisible light source 313 in the engine compartment of the first object 311 shaped as a toy car is not to be limiting, and that any placement of the first invisible light source 313 can be placed in any enclosure formed by the first object 311. For example, if the first object 311 is a toy car, the first object housing 312 may be the chassis of the toy car to which the first invisible light source 313 is attached. In this example, the first opaque substrate 316 may be the body of the toy car that forms an enclosure for the first invisible light source 313 that is attached to the chassis of the toy car, such as within the enclosure of the passenger compartment of the toy car.

In one embodiment, the first opaque substrate 316 includes at least one aperture defined by the first opaque substrate 316. For example, an aperture may be defined by the first opaque substrate 316 by removing opaque material from the first opaque substrate 316, such as by cutting away opaque material. In one embodiment, invisible light emitted by the first invisible light source 313 passes through at least one aperture formed by the first opaque substrate 316. In one embodiment, at least one aperture formed by the first opaque substrate 316 receives the emitted invisible light from the first invisible light source 313.

In one embodiment, the first object 311 includes a first transparent substrate 317 that is coupled to the first opaque substrate 316. In one embodiment, the first transparent substrate 317 is made from, at least in part, a material that is transparent to the invisible light emitted by the first invisible light source 313. In one embodiment, the first transparent substrate 317 maintains the integrity of the first opaque substrate 316, such as by providing a stiffening layer over the first opaque substrate 316. In one embodiment, the first transparent substrate 317 forms a protective layer over at least one aperture formed by the first opaque substrate 316. For example, if the first opaque substrate 316 is an engine hood of a toy car, the first transparent substrate 317 over at least one aperture provides for transparent paint to be applied to the first transparent substrate 317 so that any aperture is not visible to a normal human eye, where the transparent paint is transparent to the invisible light emitted by the first invisible light source 313.

In one embodiment, the first invisible light 319 formed with the identification pattern is emitted from the first object 311 and received by the device 301. It is to be understood that the first invisible light 319 being emitted by the first invisible light source 313 is not limited to the graphic depicted in FIG. 3, as it is depicted for illustrative purposes. For example, FIG. 3 depicts the first invisible light 319 comprising sequenced short flashes of invisible light emission that may have been emitted by an invisible light emitter controlled by an object control circuit.

In one embodiment, the second object 321 is visually indistinguishable from the first object 311. In one embodiment, the second object 321 has imperceptible variations from the first object 311. For example, if the first object 311 is a toy car, then the second object 321 may also be a toy car that looks similar to the first object 311. In one embodiment, the second object 321 has corresponding characteristics as the first object 311 described herein. In one embodiment, the second object 321 includes a second object housing 322 having corresponding characteristics as the first object housing 312 described herein. In one embodiment, the second object 321 includes a second object power supply 324 having corresponding characteristics as the first object power supply 314 described herein. In one embodiment, the second object 321 includes a second object control circuit 325 having corresponding characteristics as the first object control circuit 315 described herein. In one embodiment, the second object 321 includes a second invisible light source 323 having corresponding characteristics as the first invisible light source 313 described herein. In one embodiment, the second object 321 includes a second opaque substrate 326 having corresponding characteristics as the first opaque substrate 316 described herein. In one embodiment, the second object 321 includes a second transparent substrate 327 having corresponding characteristics as the first transparent substrate 317 described herein.

In one embodiment, the second object 321 emits second invisible light 329 having corresponding characteristics as the first invisible light 319 emitted by the first object 311 described herein, except, in one embodiment, the identification pattern of the second invisible light 329 is distinct from the identification pattern of the first invisible light 319. It is to be understood that the second invisible light 329 being emitted by the second invisible light source 323 is not limited to the graphic depicted in FIG. 3, as it is depicted for illustrative purposes. For example, FIG. 3 depicts the second invisible light 329 as comprising sequenced long flashes of invisible light emission that may have been emitted by an invisible light emitter controlled by an object control circuit.

In one embodiment, the device 301 includes a device housing 302. In one embodiment, the device 301 includes an invisible light sensor 307. In one embodiment, the invisible light sensor 307 senses the first invisible light 319 emitted from the first object 311. In one embodiment, the invisible light sensor 307 senses the second invisible light 329 emitted from the second object 321. In one embodiment, the invisible light sensor 307 senses at least a portion of the first invisible light 319 and at least a portion of the second invisible light 329 at the same time. In one embodiment, the invisible light sensor 307 senses the first invisible light 319 and the second invisible light 329 at different times.

In one embodiment, the device 301 includes a device control circuit 305. In one embodiment, the device control circuit 305 is coupled to the device housing 302. In one embodiment, the device control circuit 305 is electronically coupled to the invisible light sensor 307. In one embodiment, the device control circuit 305 detects the first identification pattern of the first invisible light 319 sensed by the invisible light sensor 307. In one embodiment, the device control circuit 305 determines a first unique identifier for the first object 311. In one embodiment, the first unique identifier of the first object 311 is based on the first identification pattern of the first invisible light 319. For example, the first identification pattern may be a series of short invisible light pulses and the first unique identifier may be a first serial number based on the short invisible light pulses.

In one embodiment, the device control circuit 305 detects the second identification pattern of the second invisible light 329 sensed by the invisible light sensor 307. In one embodiment, the device control circuit 305 determines a second unique identifier for the second object 321. In one embodiment, the second unique identifier of the second object 321 is based on the second identification pattern of the second invisible light 329. For example, the second identification pattern may be a series of long invisible light pulses and the second unique identifier may be a second serial number based on the series of long invisible light pulses.

In one embodiment, the device 301 includes a device power supply 304. In one embodiment, the device power supply 304 is coupled to the device housing 302. In one embodiment, the device power supply 304 is electronically coupled to the invisible light sensor 307. In one embodiment, the device power supply 304 is electronically coupled to the device control circuit 305. In one embodiment, the device control circuit 305 supplies power to the invisible light sensor 307 from the device power supply 304.

In one embodiment, the device 301 includes a display component 306. In one embodiment, the display component 306 is coupled to the device housing 302. In one embodiment, the display component 306 is electronically coupled to the device power supply 304. In one embodiment, the display component 306 is electronically coupled to the device control circuit 305. In one embodiment, the display component 306 displays a first unique identifier of the first object 311 determined by the device control circuit 305. In one embodiment, the display component 306 displays a second unique identifier of the second object 321 determined by the device control circuit 305.

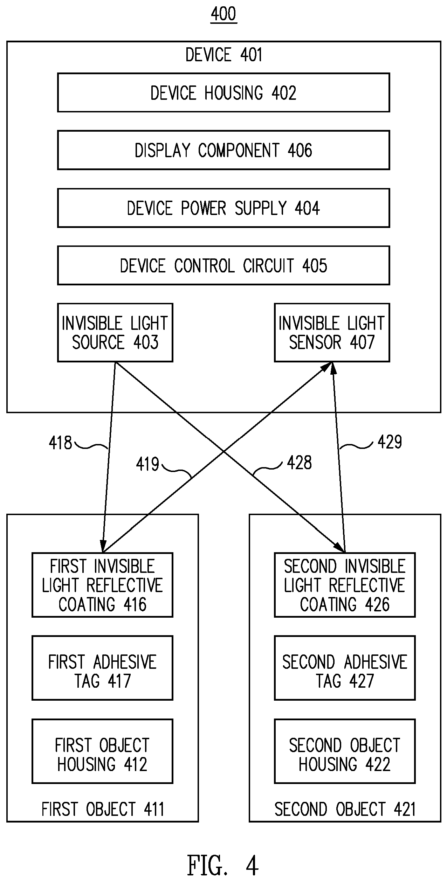

FIG. 4 is a functional block diagram of a unique identifier detection system 400, in accordance with one embodiment. It is to be understood that certain elements of FIG. 2 correspond to respective elements of FIG. 4 and may be used interchangeably when referring to FIGS. 2 and 4. Referring to FIGS. 2 and 4 together, the object 211A of FIG. 2 corresponds to the first object 411 of FIG. 4, the object 211B of FIG. 2 corresponds to the second object 421 of FIG. 4, and the device 201 of FIG. 2 corresponds to the device 401 of FIG. 4. It is to be understood that, although only a first object 411 and a second object 421 are depicted in FIG. 4, collectively they correspond to the plurality of objects 211A and 211B through 211N of FIG. 2. It is to be understood that although a Nth object is not depicted in FIG. 4, as it is in FIG. 2, the first object 411 and the second object 421 can collectively represent any number of objects, such as any number of objects that are visually indistinguishable.

Referring to FIG. 4, the unique identifier detection system 400 includes a device 401, a first object 411, and a second object 421. In one embodiment, the device 401 includes a device housing 402. In one embodiment, an invisible light source 403 is coupled to the device housing 402.

In one embodiment, the device 401 includes a device power supply 404. In one embodiment, the device power supply 404 is coupled to the device housing 402. In one embodiment, the device power supply 404 is electronically coupled to the invisible light source 403 to activate the invisible light source 403 to emit invisible light.

In one embodiment, the device 401 includes a device control circuit 405. In one embodiment, the device control circuit 405 is coupled to the device housing 402. In one embodiment, the device control circuit 405 is electronically coupled to the device power supply 404 and electronically coupled to the invisible light source 403. In one embodiment, the device control circuit 405 activates the invisible light source 403 to emit invisible light. In one embodiment, the device control circuit 405 activates the invisible light source 403 by supplying power from the device power supply 404.

In one embodiment, the invisible light source 403 emits the first emitted invisible light 418. In one embodiment, the invisible light source 403 emits the second emitted invisible light 428. In one embodiment, the invisible light source 403 emits the first emitted invisible light 418 and the second emitted invisible light 428 at the same time. In one embodiment, the invisible light source 403 emits the first emitted invisible light 418 and the second emitted invisible light 428 at different times.

In one embodiment, the first object 411 includes a first object housing 412. For example, the first object housing 412 may be considered the body of the first object 411. In one embodiment, the first object 411 includes a first invisible light reflective coating 416 that is coupled to the first object housing 412. In one embodiment, the first invisible light reflective coating 416 is made from a material that is reflective to the first emitted invisible light 418 emitted by the invisible light source 403. In one embodiment, the first invisible light reflective coating 416 receives the first emitted invisible light 418.

In one embodiment, the first invisible light reflective coating 416 defines a coating design. For example, a first quick response (QR) code may be defined by the first invisible light reflective coating 416. In one embodiment, the first emitted invisible light 418 emitted by the invisible light source 403 is received by the first invisible light reflective coating 416, and first reflected invisible light 419 is reflected by the first invisible light reflective coating 416. In one embodiment, the first reflected invisible light 419 is reflected with a first identification pattern corresponding to the first coating design associated with the first invisible light reflective coating 416.

In one embodiment, the first object 411 includes a first adhesive tag 417 that is coupled to the first object housing 412. In one embodiment, the first adhesive tag 417 is adhered to the first object housing 412, for example, with an adhesive. In one embodiment, the first adhesive tag comprises a material that is couplable with the first invisible light reflective coating 416. In one embodiment, the first invisible light reflective coating 416 is coupled to the first adhesive tag 417, and the first adhesive tag 417 is coupled to the first object housing 412. It is to be understood that in another embodiment, the first invisible light reflective coating 416 is coupled to the first object housing 412 without the adhesive tag 417.

In one embodiment, the second object 421 is visually indistinguishable from the first object 411. In one embodiment, the second object 421 has imperceptible variations from the first object 411. For example, if the first object 411 is a toy car, then the second object 421 may also be a toy car that looks similar to the first object 411. In one embodiment, the second object 421 has corresponding characteristics as the first object 411 described herein. In one embodiment, the second object 421 includes a second object housing 422 having corresponding characteristics as the first object housing 412 described herein.

In one embodiment, the second object 421 includes a second invisible light reflective coating 426 having corresponding characteristics as the first invisible light reflective coating 416 described herein, except that, in one embodiment, the second coating design of the second invisible light reflective coating 426 forms a different identification pattern of reflected invisible light than the identification pattern of the first coating design formed by the first invisible light reflective coating 416. In one embodiment, the second object 421 includes a second adhesive tag 427 having corresponding characteristics as the first adhesive tag 417 described herein.

In one embodiment, the second object 421 receives second emitted invisible light 428 having corresponding characteristics as the first emitted invisible light 418. In one embodiment the second object 421 reflects second reflected invisible light 429 having corresponding characteristics as the first reflected invisible light 419 emitted by the first object 411 described herein, except, in one embodiment, the identification pattern of the second reflected invisible light 429 is distinct from the identification pattern of the first reflected invisible light 419.

In one embodiment, the first reflected invisible light 419 formed with the first identification pattern is reflected from the first object 411 and received by the device 401. In one embodiment, the second reflected invisible light 429 formed with the second identification pattern is reflected from the second object 421 and received by the device 401.

In one embodiment, the device 401 includes an invisible light sensor 407. In one embodiment, the invisible light sensor 407 senses the first reflected invisible light 419 emitted from the first object 411. In one embodiment, the invisible light sensor 407 senses the second reflected invisible light 429 emitted from the second object 421. In one embodiment, the invisible light sensor 407 senses the first reflected invisible light 419 and the second reflected invisible light 429 at the same time. In one embodiment, the invisible light sensor 407 senses the first reflected invisible light 419 and the second reflected invisible light 429 at different times.

In one embodiment, the device control circuit 405 is electronically coupled to the invisible light sensor 407. In one embodiment, the device control circuit 405 detects the first identification pattern of the first reflected invisible light 419 sensed by the invisible light sensor 407. In one embodiment, the device control circuit 405 determines a first unique identifier for the first object 411. In one embodiment, the first unique identifier of the first object 411 is based on the first identification pattern of the first reflected invisible light 419. For example, the first identification pattern may be a first quick response code and the first unique identifier may be a first serial number based on the first quick response code.

In one embodiment, the device control circuit 405 detects the second identification pattern of the second reflected invisible light 429 sensed by the invisible light sensor 407. In one embodiment, the device control circuit 405 determines a second unique identifier for the second object 421. In one embodiment, the second unique identifier of the second object 421 is based on the second identification pattern of the second reflected invisible light 429. For example, the second identification pattern may be a second quick response code and the second unique identifier may be a second serial number based on the second quick response code.

In one embodiment, the device power supply 404 is electronically coupled to the invisible light sensor 407. In one embodiment, the device power supply 404 is electronically coupled to the device control circuit 405. In one embodiment, the device control circuit 405 supplies power to the invisible light sensor 407 from the device power supply 404.

In one embodiment, the device 401 includes a display component 406. In one embodiment, the display component 406 is coupled to the device housing 402. In one embodiment, the display component 406 is electronically coupled to the device power supply 404. In one embodiment, the display component 406 is electronically coupled to the device control circuit 405. In one embodiment, the display component 406 displays a first unique identifier of the first object 411 determined by the device control circuit 405. In one embodiment, the display component 406 displays a second unique identifier of the second object 421 determined by the device control circuit 405.

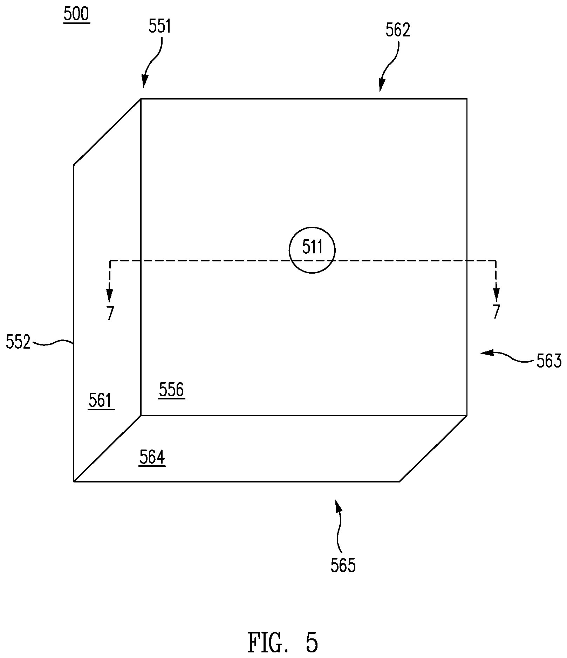

FIG. 5 illustrates an example perspective view of an example object 551 of a unique identifier detection system 500, in accordance with one embodiment. Referring to FIGS. 1 and 5 together, the example object 551 may be any of the objects 111A and 111B through 111N of FIG. 1. Referring to FIGS. 3 and 5 together, the example object 551 may be any of the first object 311 and the second object 321.

As illustrated in FIG. 5, the object 551 has an object housing 552 and an opaque substrate 556. In one embodiment, the opaque substrate 556 is coupled to the object housing 552 to define an enclosure in which an invisible light source (not shown) is housed. In one embodiment, the object housing 552 has a base wall 565 opposed to the opaque substrate 556. Although not shown in FIG. 5, in one embodiment, one or more components may be coupled to the base wall 565, such as an invisible light source, an object control circuit, and an object power supply.

In one embodiment, the object housing 552 includes one or more side walls extending between the base wall 565 and the opaque substrate 556. As illustrated in FIG. 5, the object housing 552 includes a first side wall 561, a second side wall 562 adjacent to the first side wall 561, a third side wall 563 adjacent to the second side wall 562 and opposed to the first side wall 561, and a fourth side wall 564 adjacent to the third side wall 563, adjacent to the first side wall 561, and opposed to the second side wall 562.

It is to be understood that although the object housing 552 illustrated in FIG. 5 has a cube shape, the shape illustrated in FIG. 5 is not meant to be limiting. Under some embodiments, an object housing 552 has a two-dimensional shape, a three-dimensional shape, and any other housing shape, as discussed herein, or as known in the art at the time of filing, or as developed, or becomes available, after the time of filing. It is to be further understood that although the opaque substrate 556 illustrated in FIG. 5 has a flat shape, the shape illustrated in FIG. 5 is not meant to be limiting. Under some embodiments, an opaque substrate 556 has a two-dimensional shape, a three-dimensional shape, and any other substrate shape, as discussed herein, or as known in the art at the time of filing, or as developed, or becomes available, after the time of filing. Although not illustrated in FIG. 5, the object 551 may include a transparent substrate coupled to the opaque substrate 556.

In one embodiment, the opaque substrate 556 includes an aperture 511 designed from the opaque substrate 556. As illustrated in FIG. 5, the aperture 511 is circular. It is to be understood that although the aperture 511 is illustrated in FIG. 5 as a circular form, the aperture 511 illustrated in FIG. 5 is not meant to be limiting. In some embodiments, the aperture 511 may have an oval form, a square form, an irregular form, and any aperture form, as discussed herein, or as known in the art at the time of filing, or as developed, or becomes available, after the time of filing.

In one embodiment, the aperture 511 receives invisible light emitted by an invisible light source housed in an enclosure of the object 551, and the invisible light is formed by sequenced pulsing invisible light emission to have an identification pattern unique to the object 551 in relation to other objects of the system. For example, if two car toys are used in a racing game, and the cars are visually similar, a first car may have a first sequenced pulsing invisible light emission to form a first identification pattern of short pulses of invisible light. In this example, a second toy car may have a second sequenced pulsing invisible light emission to form a second identification pattern of long pulses of invisible light. In this example, a device can identify the first toy car by sensing the first invisible light comprising the short pulses of invisible light and detecting the first identification pattern, and the device can identify the second toy car by sensing the second invisible light comprising the long pulses of invisible light and detecting the second identification pattern.

It is to be understood that although a single aperture 511 is depicted in FIG. 5, the object 551 may have any number of apertures and any number of corresponding invisible light emitters. For example, if an object is cube shaped with six walls, an aperture may be located on each wall of the cube, with six corresponding light emitters located in the enclosure of the object 551. In one embodiment, each invisible light emitter of the object 551 emits invisible light having the same identification pattern, such as the same sequenced pulsing invisible light emission.

In one embodiment, each invisible light emitter of the object 551 emits invisible light having the same sequenced pulsing invisible light emission. Such may be advantageous to increase the field of view of a device to sense invisible light emitted by the object 551. In one embodiment, each invisible light emitter of the object 551 emits invisible light having a different sequenced pulsing invisible light emission to form a combined identification pattern. Such may be advantageous to reduce the amount of time needed for a device to sense invisible light sequentially emitted by the object 551.

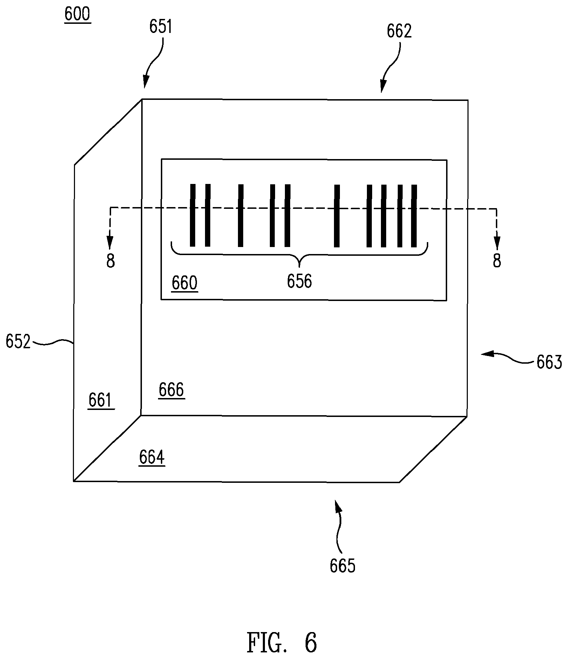

FIG. 6 illustrates an example perspective view of an example object 651 of a unique identifier detection system 600, in accordance with one embodiment. Referring to FIGS. 2 and 6 together, the example object 651 may be any of the objects 211A and 211B through 211N of FIG. 2. Referring to FIGS. 4 and 6 together, the example object 651 may be any of the first object 411 and the second object 421. As illustrated in FIG. 6, the object 651 has an object housing 652. In one embodiment, the object housing 652 has a base wall 665 opposed to a cover wall 666. In one embodiment, the object housing 652 includes one or more side walls extending between the base wall 665 and the cover wall 666. As illustrated in FIG. 6, the object housing 652 includes a first side wall 661, a second side wall 662 adjacent to the first side wall 661, a third side wall 663 adjacent to the second side wall 662 and opposed to the first side wall 661, and a fourth side wall 664 adjacent to the third side wall 663, adjacent to the first side wall 661, and opposed to the second side wall 662.

It is to be understood that although the object housing 652 illustrated in FIG. 6 has a cube shape, the shape illustrated in FIG. 6 is not meant to be limiting. Under some embodiments, an object housing 652 has a two-dimensional shape, a three-dimensional shape, and any other housing shape, as discussed herein, or as known in the art at the time of filing, or as developed, or becomes available, after the time of filing.

In one embodiment, an optional adhesive tag 660 is adhered to the cover wall 666. In one embodiment, the invisible light reflective coating 656 is coupled to the optional adhesive tag 660. Though not shown, in one embodiment, the invisible light reflective coating 656 is coupled to the cover wall 666. As illustrated in FIG. 6, the invisible light reflective coating 656 forms a coating design of a bar code. It is to be understood that although the invisible light reflective coating 656 is illustrated in FIG. 6 as a bar code design, the invisible light reflective coating 656 illustrated in FIG. 6 is not meant to be limiting. In some embodiments, the invisible light reflective coating 656 may have a quick response code design, a braille design, and any coating design, as discussed herein, or as known in the art at the time of filing, or as developed, or becomes available, after the time of filing.

In one embodiment, the invisible light reflective coating 656 receives emitted invisible light emitted by an invisible light source. In one embodiment, the invisible light reflective coating 656 reflects reflected invisible light that is formed by the invisible light reflective coating 656 to have an identification pattern unique to the object 651 in relation to other objects of the system. For example, if two car toys are used in a racing game, and the cars are visually similar, a first car may have a first invisible light reflective coating 656 with a first coating design from which first reflected invisible light would reflect to form a first identification pattern based on the first coating design. In this example, a second toy car may have a second invisible light reflective coating 656 from which second reflected invisible light would reflect to form a second identification pattern based on the second coating design. In this example, a device can identify the first toy car by sensing the first reflected invisible light and detecting the first identification pattern, and the device can identify the second toy car by sensing the second reflected invisible light and detecting the second identification pattern.

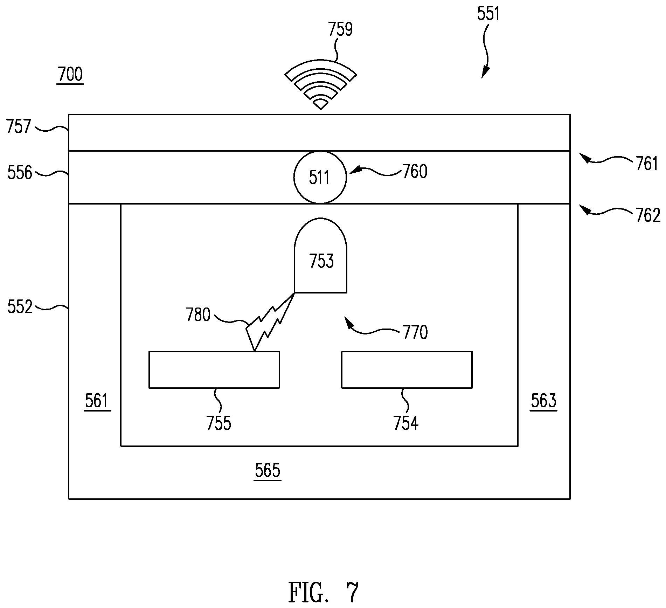

FIG. 7 is a schematic cross-section of an example object 551 of a unique identifier detection system 700 as illustrated at line 7-7 of the embodiment of FIG. 5, in accordance with one embodiment. Referring to FIGS. 5 and 7 together, the object 551 includes an object housing 552 and an opaque substrate 556 coupled to the object housing 552. As illustrated in FIG. 7, a schematic cross-sectional view of one embodiment of the object housing 552 includes a base wall 565, a first side wall 561, and an opposing third side wall 563. In one embodiment, an enclosure 770 of the object 551 is defined at least by the opaque substrate 556. In one embodiment, an enclosure 770 of the object 551 is defined by the opaque substrate 556 coupled to the object housing 552.

In one embodiment, the invisible light source 753 is housed in the enclosure 770. In one embodiment, the invisible light source 753 is coupled to the object housing 552. In one embodiment, the invisible light source 753 is a light emitting diode (LED) that emits invisible light. In one embodiment, the invisible light source 753 is a plurality of light emitting diodes (LEDs) that emit invisible light. In one embodiment, the invisible light source 753 emits infrared light. In one embodiment, the invisible light source 753 emits ultraviolet light.

In one embodiment, the object 551 includes an object power supply 754 that is housed in the enclosure 770. In one embodiment, the object power supply 754 is coupled to the object housing 552. In one embodiment, the object power supply 754 is electronically coupled to the invisible light source 753 to supply power.

In one embodiment, the object 551 includes an object control circuit 755 that is housed in the enclosure 770. In one embodiment, the object control circuit 755 is coupled to the object housing 552. In one embodiment, the object control circuit 755 is electronically coupled to the invisible light source 753. In one embodiment, the object control circuit 755 is electronically coupled to the object power supply 754. In one embodiment, the object control circuit 755 activates the invisible light source 753 to emit invisible light. In one embodiment, the object control circuit 755 activates the invisible light source 753 with power from the object power supply 754. In one embodiment, the object control circuit 755 supplies pattern power 780 to the invisible light source 753.

In one embodiment, the object control circuit 755 supplies pattern power 780 from the object power supply 754 to the invisible light source 753. In one embodiment, the pattern power 780 corresponds to the identification pattern 759. In one embodiment, the pattern power 780 comprises sequenced pulsing power. In one embodiment, the identification pattern 759 comprises sequenced pulsing invisible light emission. In one embodiment, sequenced pulsing invisible light emission comprises a plurality of pulses of invisible light, in which each pulse has a duration over time. In this embodiment, each pulse of invisible light is based on a corresponding supply of sequenced pulsing power for a corresponding duration over time. In one embodiment, a sequence of pulses and pauses between pulses comprises the identification pattern 759.

In one embodiment, the opaque substrate 556 includes an aperture 511 formed from the opaque substrate 556. In one embodiment, the opaque substrate 556 includes an inner surface 762. In one embodiment, the inner surface 762 forms, at least in part, the enclosure 770. In one embodiment, the opaque substrate 556 includes an outer surface 761 opposed to the inner surface 762. In one embodiment, the opaque substrate 556 includes at least one side surface 760 that extends between the outer surface 761 and the inner surface 762. In one embodiment, the side surface 760 of the opaque substrate 556 defines the aperture 511. It is to be understood that the opaque substrate 556 may include any number of side surfaces 760 to define any number of apertures 511. It is to be further understood that the side surface 760 shape of a circle illustrated in FIG. 7 is not meant to be limiting, and that a side surface 760 may define any shaped aperture, such as an oval, a square, a rectangle, a cylinder, a cube, and any other aperture shape, as discussed herein, or as known in the art at the time of filing, or as developed, or becomes available, after the time of filing.

In one embodiment, the opaque substrate 556 comprises material that is opaque to the invisible light emitted by the invisible light source 753. In one embodiment, the aperture 511 defined by the side surface 760 of the opaque substrate 556 receives invisible light emitted from the invisible light source 753. In one embodiment, the invisible light emitted from the invisible light source 753 is formed to have an identification pattern 759 that conforms to the side surface 760. In one embodiment, the invisible light is formed to have the identification pattern 759 that is emitted from the object 551.

In one embodiment, the object 551 includes a transparent substrate 757. In one embodiment, the transparent substrate 757 is coupled to the opaque substrate 556. In one embodiment, the transparent substrate 757 covers at least the aperture 511 formed by the side surface 760. In one embodiment, the transparent substrate 757 provides a protective layer over the aperture 511 formed by the side surface 760. In one embodiment, the transparent substrate 757 comprises material that is transparent to the invisible light emitted by the invisible light source 753.

In one embodiment, the invisible light is received by the aperture 511 that is defined by the side surface 760. In one embodiment, such invisible light is conformed to the identification pattern 759 as it exits the aperture 511 and passes through the transparent substrate 757 into the environment adjacent to the transparent substrate 757. In one embodiment, the invisible light corresponding to the identification pattern 759 is sensed by a device.

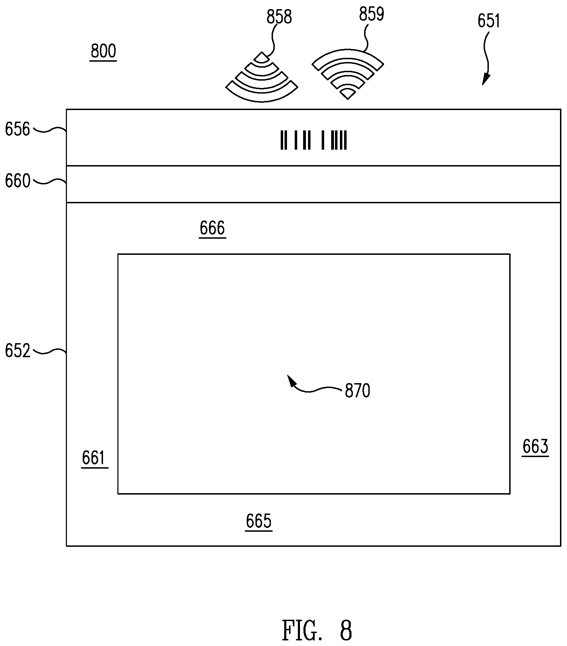

FIG. 8 is a schematic cross-section of an example object 651 of a unique identifier detection system 800 as illustrated at line 8-8 of the embodiment of FIG. 6, in accordance with one embodiment. Referring to FIGS. 6 and 8 together, the object 651 includes an object housing 652. As illustrated in FIG. 8, a schematic cross-sectional view of one embodiment of the object housing 652 includes a base wall 665, an opposing cover wall 666, a first side wall 661, and an opposing third side wall 663, which defines an enclosure 870 of the object 651. In one embodiment, the optional adhesive tag 660 is adhered to the cover wall 666.

In one embodiment, the object 651 includes the invisible light reflective coating 656. In one embodiment, the invisible light reflective coating 656 is coupled to the optional adhesive tag 660. Although not shown, in one embodiment, the invisible light reflective coating 656 is coupled directly to the cover wall 666, and the object 651 does not include an adhesive tag 660 in such an embodiment.

In one embodiment, the invisible light reflective coating 656 receives the emitted invisible light without an identification pattern 858. In one embodiment, the emitted invisible light without an identification pattern 858 is infrared light. In one embodiment, the emitted invisible light without an identification pattern 858 is ultraviolet light. In one embodiment, the invisible light reflective coating 656 reflects received emitted invisible light without an identification pattern 858 as reflected invisible light having an identification pattern 859. In one embodiment, the reflected invisible light having the identification pattern 859 is reflected infrared light. In one embodiment, the reflected invisible light having the identification pattern 859 is reflected ultraviolet light.

In one embodiment, the reflected invisible light is conformed to the identification pattern 859 as it is reflected by the invisible light reflective coating 656 into the environment adjacent to the object 651. In one embodiment, the reflected invisible light corresponding to the identification pattern 859 is sensed by a device.

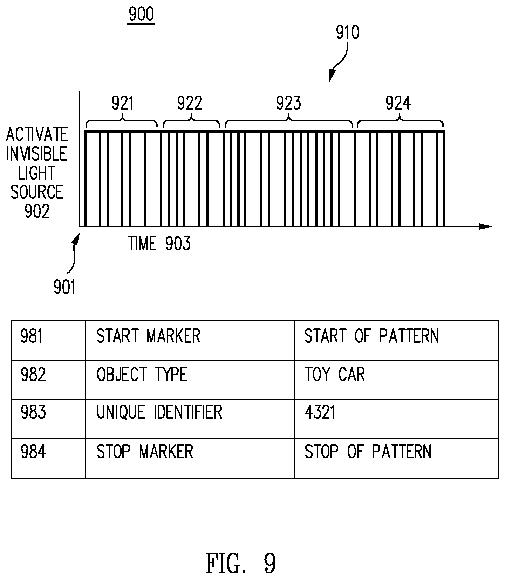

FIG. 9 illustrates an example identification pattern 910 of a unique identifier detection system 900, in accordance with one embodiment. In one embodiment, the identification pattern 910 comprises sequenced pulsing invisible light emission. It is to be understood that the illustration of FIG. 9 is not meant to be limiting and that the identification pattern 910 can have any number of variations, as discussed herein, or as known in the art at the time of filing, or as developed, or becomes available, after the time of filing.

In one embodiment, an object control circuit supplies power, such as electrical energy, to an invisible light source to produce invisible light output. In one embodiment, the object control circuit adjusts the power supplied to the invisible light source. In one embodiment, the width of a pulse is determined by the power supplied per unit of time by the object control circuit. In one embodiment, the pause between two pulses, in which there is no invisible light output, is determined by the absence of power supplied per unit of time by the object control circuit.

As depicted in the embodiment of FIG. 9, the identification pattern 910 of pulses of invisible light can be illustrated by the graph 901. It is to be understood that the graph 901 is not limited to the graphic depicted in FIG. 9, as it is depicted for illustrative purposes. In one embodiment, the graph 901 has a y-axis of activate invisible light source 902 that illustrates when the object control circuit activates the invisible light source. In one embodiment, the graph 901 has an x-axis of time 903 that illustrates the width of pulses of invisible light emission and pauses. In one embodiment, a bar of the graph represents an invisible light pulse, such as the invisible light emitter having a state of "on." In one embodiment, the absence of a bar of the graph depicted by diagonal lines represents a pause, such as the invisible light emitter having a state of "off."

In one embodiment, the identification pattern 910 includes a fiducial marker. In one embodiment, a fiducial marker comprises a start marker pattern 921. In one embodiment, the start marker pattern 921 comprises at least one invisible light pulse of invisible light emission and at least one pause. As illustrated in FIG. 9, in one embodiment, the start marker pattern 921 comprises a sequence of a double time unit pulse, a single time unit pause, a double time unit pulse, a single time unit pause, a double time unit pulse, and a double time unit pause. Is it to be understood that such pulses and pauses depicted in FIG. 9 are for illustrative purposes, and that pulses and pauses may have time units of any duration illustrated as any bar width of the graph 901. In one embodiment, the start marker pattern 921 provides information of a start marker 981 of at least the start of the identification pattern 910. For example, a start marker 981 may indicate that the identification pattern 910 is starting.

In one embodiment, the identification pattern 910 includes an object type pattern 922. In one embodiment, the object type pattern 922 comprises at least one invisible light pulse of invisible light emission and at least one pause. In one embodiment, the object type pattern 922 comprises a sequence of a single time unit pulse, a single time unit pause, a single time unit pulse, a double time unit pause, a single time unit pulse, and a double time unit pause. Is it to be understood that such pulses and pauses depicted in FIG. 9 are for illustrative purposes, and that pulses and pauses may have time units of any duration illustrated as any bar width of the graph 901. In one embodiment, the object type pattern 922 provides information of an object type 982 about the type of object that is associated with the identification pattern 910. For example, if the object is a toy car, the object type 982 may include information that the object type is a "toy car."

In one embodiment, the identification pattern 910 includes an object identification pattern 923. In one embodiment, the object identification pattern 923 comprises at least one invisible light pulse of invisible light emission and at least one pause. In one embodiment, the object identification pattern 923 comprises a sequence of a single time unit pulse, a single time unit pause, a single time unit pulse, a double time unit pause, a single time unit pulse, a double time unit pause, a single time unit pulse, a single time unit pause, a single time unit pulse, a single time unit pause, a single time unit pulse, a single time unit pause, a single time unit pulse, and a double time unit pause. It is to be understood that such pulses and pauses depicted in FIG. 9 are for illustrative purposes, and that pulses and pauses may have time units of any duration illustrated as any bar width of the graph 901. In one embodiment, the object identification pattern 923 provides information of a unique identifier 983 that uniquely identifies the object that is associated with the identification pattern 910 in relation to other adjacent and similar objects of the system. For example, the unique identifier 983 may include information regarding a serial number of an object, such as "4321," where a second serial number of a second object may be "4322."

In one embodiment, the identification pattern 910 includes a stop marker pattern 924. In one embodiment, the stop marker pattern 924 comprises at least one invisible light pulse of invisible light emission and at least one pause. In one embodiment, the stop marker pattern 924 comprises a sequence of a double time unit pulse, a single time unit pause, a double time unit pulse, a single time unit pause, a double time unit pulse, a single time unit pause, a double time unit pulse, and a single time unit pause. Is it to be understood that such pulses and pauses depicted in FIG. 9 are for illustrative purposes, and that pulses and pauses may have time units of any duration illustrated as any bar width of the graph 901. In one embodiment, the stop marker pattern 924 provides information of a stop marker 984 of at least the stop of the identification pattern 910. For example, a stop marker 981 may indicate that the identification pattern 910 is stopping, and ready to repeat with the start marker pattern 921. Although not depicted in the graph 901, in one embodiment, the identification pattern 910 repeats. For example, after the sequenced pulsing invisible light emission of the stop marker pattern 924, the sequenced pulsing invisible light emission of the start marker pattern 921 may commence.

In one embodiment, the identification pattern 910 includes error correction information (not shown). In one embodiment, error correction information can resolve issues related to a line of sight of the identification pattern 910 in relation to an invisible light sensor. In one embodiment, error correction information can resolve issues related to ambient invisible light in the adjacent environment of the identification pattern 910. In one embodiment, error correction information can resolve issues related to failure of a component of an invisible light source. Error correction information includes Reed-Solomon error correction and other error correction information, as discussed herein, or as known in the art at the time of filing, or as developed, or becomes available, after the time of filing.

In one embodiment, the unique identifier 983 is utilized by a financial management system. For example, a user may manage the user's finances with mixed reality in which the user is managing the finances of physical assets that are objects, such as the objects 111A and 111B through 111N of FIG. 1. In this example, a user wears smart eyewear and each physical asset in view of the user is uniquely identified via respective unique identifiers 983. In this example, the financial information of each physical asset is managed within the financial management system by mapping a unique identifier 983 to associated financial information stored in the financial management system.

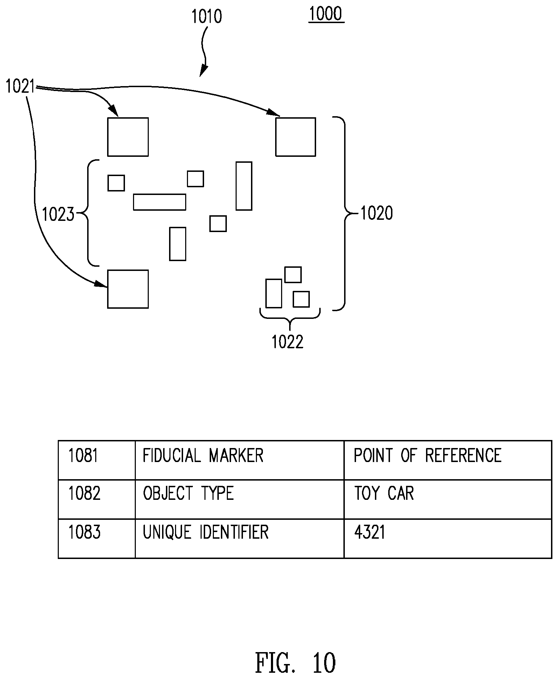

FIG. 10 illustrates an example identification pattern 1010 of a unique identifier detection system 1000, in accordance with one embodiment. In one embodiment, the coating design 1020 of the identification pattern 1010 is defined by an invisible light reflective coating, such as the invisible light reflective coating 656 of FIG. 6. As illustrated in FIG. 10, in one embodiment, the identification pattern 1010 is represented by a quick response (QR) code. It is to be understood that the illustration of FIG. 10 is not meant to be limiting and that a coating design 1020 of the identification pattern 1010 can have any number of variations, as discussed herein, or as known in the art at the time of filing, or as developed, or becomes available, after the time of filing.

In one embodiment, the coating design 1020 of the identification pattern 1010 includes a fiducial marker design 1021. In one embodiment, the fiducial marker design 1021 comprises at least one portion of invisible light reflective coating. For example, a portion of invisible light reflective coating may be an application of invisible light reflective ink that corresponds to the respective portion of the coating design 1020, such as the fiducial marker design 1021. In one embodiment, the fiducial marker design 1021 reflects invisible light emitted by an invisible light source. In one embodiment, the fiducial marker design 1021 provides information of a fiducial marker 1081 of at least one point of reference for the coating design 1020 of the identification pattern 1010, such as an orientation of the coating design 1020 of the identification pattern 1010. For example, a fiducial marker 1081 may indicate that an object is pointing north.

In one embodiment, the coating design 1020 of the identification pattern 1010 includes an object type design 1022. In one embodiment, the object type design 1022 comprises at least one portion of invisible light reflective coating. For example, a portion of invisible light reflective coating may be an application of invisible light reflective ink that corresponds to the respective portion of the coating design 1020, such as the object type design 1022. In one embodiment, the object type design 1022 reflects invisible light emitted by an invisible light source. In one embodiment, the object type design 1022 provides information of an object type 1082 about the type of object that is associated with the coating design 1020 of the identification pattern 1010. For example, if the object is a toy car, the object type 1082 may include information that the object type is a "toy car."

In one embodiment, the coating design 1020 of the identification pattern 1010 includes an object identification design 1023. In one embodiment, the object identification design 1023 comprises at least one portion of invisible light reflective coating. For example, a portion of invisible light reflective coating may be an application of invisible light reflective ink that corresponds to the respective portion of the coating design 1020, such as the object identification design 1023. In one embodiment, the object identification design 1023 reflects invisible light emitted by an invisible light source. In one embodiment, the object identification design 1023 provides information of a unique identifier 1083 that uniquely identifies the object that is associated with the coating design 1020 of the identification pattern 1010 in relation to other adjacent and similar objects of the system. For example, the unique identifier 1083 may include information regarding a serial number of an object, such as "4321," where a second serial number of a second object may be "4322."

In one embodiment, the coating design 1020 of the identification pattern 1010 includes error correction information (not shown). In one embodiment, error correction information can resolve issues related to a line of sight of the coating design 1020 of the identification pattern 1010 in relation to an invisible light sensor. In one embodiment, error correction information can resolve issues related to ambient invisible light in the adjacent environment of the coating design 1020 of the identification pattern 1010. In one embodiment, error correction information can resolve issues related to failure of a component of an invisible light source. Error correction information includes Reed-Solomon error correction and other error correction information, as discussed herein, or as known in the art at the time of filing, or as developed, or becomes available, after the time of filing.

In one embodiment, the unique identifier 1083 is utilized by a financial management system. For example, a user may manage the user's finances with mixed reality in which the user is managing the finances of physical assets that are objects, such as the objects 211A and 211B through 211N of FIG. 2. In this example, a user wears smart eyewear and each physical asset in view of the user is uniquely identified via respective unique identifiers 1083. In this example, the financial information of each physical asset is managed within the financial management system by mapping a unique identifier 1083 to associated financial information stored in the financial management system.

### EXEMPLARY PROCESS

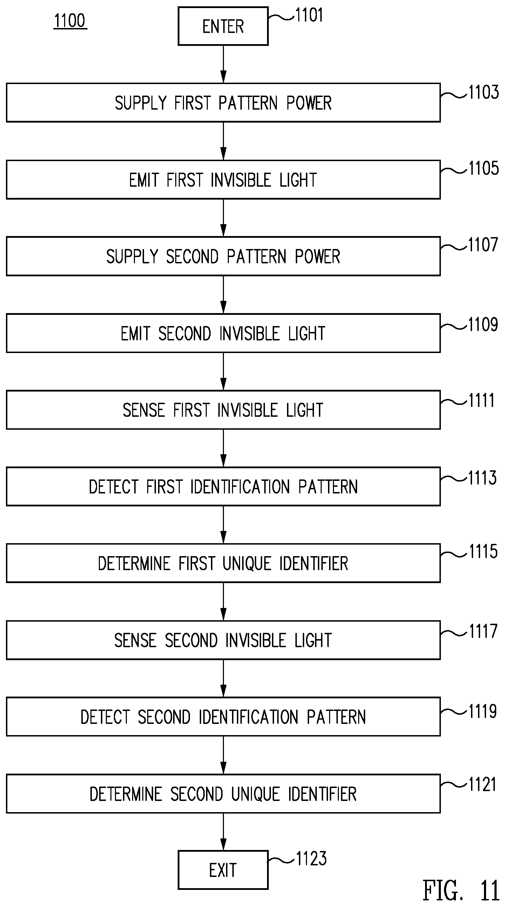

FIG. 11 is a flow diagram of a process 1100 for unique identifier detection, in accordance with one embodiment. Referring to FIGS. 1, 3, 5, 7, 9, and 11 together, the process 1100 for unique identifier detection begins at ENTER OPERATION 1101 and process flow proceeds to SUPPLY FIRST PATTERN POWER OPERATION 1103.

In one embodiment, at SUPPLY FIRST PATTERN POWER OPERATION 1103, a first object control circuit 315 supplies first pattern power 780 from a first object power supply 314 to a first invisible light source 313. In one embodiment, the first object power supply 314 is coupled to the first object housing 312. In one embodiment, the first object control circuit 315 is coupled to the first object housing 312 of the first object 311. In one embodiment, the first object control circuit 315 is electronically coupled to the first object power supply 314 and to the first invisible light source 313. In one embodiment, the first pattern power 780 comprises first sequenced pulsing power. In one embodiment, the first pattern power 780 comprises first optical communication signaling power. In one embodiment, the first invisible light source 313 is powered by the first object power supply 314 and controlled by the first object control circuit 315.

In one embodiment, once the first pattern power 780 is supplied to the first invisible light source 313 at SUPPLY FIRST PATTERN POWER OPERATION 1103, process flow proceeds to EMIT FIRST INVISIBLE LIGHT OPERATION 1105.

In one embodiment, at EMIT FIRST INVISIBLE LIGHT OPERATION 1105, the first invisible light 319 is emitted from the first invisible light source 313. In one embodiment, the first invisible light 319 corresponds to the first identification pattern 759. In one embodiment, the first identification pattern 759 comprises first sequenced pulsing invisible light emission. In one embodiment, the first sequenced pulsing invisible light emission corresponds to the first sequenced pulsing power. In one embodiment, the first identification pattern 759 comprises first optical communication signals. In one embodiment, the first optical communication signals correspond to the first optical communication signaling power.

In one embodiment, the first invisible light 319 is received by the first aperture 511 of the first opaque substrate 316. In one embodiment, the first opaque substrate 316 is coupled to the first object housing 312. In one embodiment, the first opaque substrate 316 comprises material that is opaque to the first invisible light 319 emitted by the first invisible light source 313. In one embodiment, the first aperture 511 is designed from at least one respective side surface 760 of the first opaque substrate 316. In one embodiment, the first aperture 511 is configured to receive the first invisible light 319 emitted by the first invisible light source 313. In one embodiment, the first invisible light source 313 is an infrared light source. In one embodiment, the first invisible light source 313 comprises one or more light emitting diodes (LED) that emit invisible light, such as infrared light.

In one embodiment, once the first invisible light 319 is emitted from the first invisible light source 313 at EMIT FIRST INVISIBLE LIGHT OPERATION 1105, process flow proceeds to SUPPLY SECOND PATTERN POWER OPERATION 1107.

In one embodiment, at SUPPLY SECOND PATTERN POWER OPERATION 1107, a second object control circuit 325 supplies second pattern power 780 from a second object power supply 324 to a second invisible light source 323. In one embodiment, the second pattern power of SUPPLY SECOND PATTERN POWER OPERATION 1107 is distinct from the first pattern power of SUPPLY FIRST PATTERN POWER OPERATION 1103. In one embodiment, the second object power supply 324 is coupled to the second object housing 322. In one embodiment, the second object control circuit 325 is coupled to the second object housing 322 of the second object 321. In one embodiment, the second object control circuit 325 is electronically coupled to the second object power supply 324 and to the second invisible light source 323. In one embodiment, the second pattern power 780 comprises second sequenced pulsing power. In one embodiment, the second pattern power 780 comprises second optical communication signaling power. In one embodiment, the second invisible light source 323 is powered by the second object power supply 324 and controlled by the second object control circuit 325.

In one embodiment, once the second invisible light 329 is emitted from the second invisible light source 323 at SUPPLY SECOND PATTERN POWER OPERATION 1107, process flow proceeds to EMIT SECOND INVISIBLE LIGHT OPERATION 1109.

In one embodiment, at EMIT SECOND INVISIBLE LIGHT OPERATION 1109, the second invisible light 329 is emitted from the second invisible light source 323. In one embodiment, the second invisible light 329 corresponds to the second identification pattern 759. In one embodiment, the second identification pattern of EMIT SECOND INVISIBLE LIGHT OPERATION 1109 is distinct from the first identification pattern of EMIT FIRST INVISIBLE LIGHT OPERATION 1105. In one embodiment, the second identification pattern 759 comprises second sequenced pulsing invisible light emission. In one embodiment, the second sequenced pulsing invisible light emission corresponds to the second sequenced pulsing power. In one embodiment, the second identification pattern 759 comprises second optical communication signals. In one embodiment, the second optical communication signals correspond to the second optical communication signaling power.

In one embodiment, the second invisible light 329 is received by the second aperture 511 of the second opaque substrate 326. In one embodiment, the second opaque substrate 326 is coupled to the second object housing 322. In one embodiment, the second opaque substrate 326 comprises material that is opaque to the second invisible light 329 emitted by the second invisible light source 323. In one embodiment, the second aperture 511 is designed from at least one respective side surface 760 of the second opaque substrate 326. In one embodiment, the second aperture 511 is configured to receive the second invisible light 329 emitted by the second invisible light source 323. In one embodiment, the second invisible light source 323 is an infrared light source. In one embodiment, the second invisible light source 323 comprises one or more light emitting diodes (LED) that emit invisible light, such as infrared light.

In one embodiment, once the second invisible light 329 is emitted from the second invisible light source 323 at EMIT SECOND INVISIBLE LIGHT OPERATION 1109, process flow proceeds to SENSE FIRST INVISIBLE LIGHT OPERATION 1111.

In one embodiment, at SENSE FIRST INVISIBLE LIGHT OPERATION 1111, the first invisible light 319 is sensed by the invisible light sensor 307 coupled to the device housing 302 of the device 301. In one embodiment, the invisible light sensor 307 is configured to sense invisible light within the invisible light spectrum emitted by the first invisible light source 313. In one embodiment, the first invisible light source 313 emits infrared light, and the invisible light sensor 307 senses such infrared light.

In one embodiment, once the first invisible light 319 is sensed by the invisible light sensor 307 at SENSE FIRST INVISIBLE LIGHT OPERATION 1111, process flow proceeds to DETECT FIRST IDENTIFICATION PATTERN OPERATION 1113.

In one embodiment, at DETECT FIRST IDENTIFICATION PATTERN OPERATION 1113, the device control circuit 305 detects the first identification pattern 759 of the first invisible light 319 sensed by the invisible light sensor 307. In one embodiment, the device control circuit 305 is coupled to the device housing 302 of the device 301. In one embodiment, the device control circuit 305 is electronically coupled to the invisible light sensor 307. In one embodiment, the device control circuit 305 controls the invisible light sensor 307 to sense invisible light.

In one embodiment, once the device control circuit 305 detects the first identification pattern 759 of the first invisible light 319 at DETECT FIRST IDENTIFICATION PATTERN OPERATION 1113, process flow proceeds to DETERMINE FIRST UNIQUE IDENTIFIER OPERATION 1115.

In one embodiment, at DETERMINE FIRST UNIQUE IDENTIFIER OPERATION 1115, the device control circuit 305 determines the first unique identifier 983 based on the first identification pattern 759. In one embodiment, the device 301 includes a processor utilized by the device control circuit 305 to determine the first unique identifier 983. In one embodiment, the device 301 includes memory utilized by the device control circuit 305 to determine the first unique identifier 983. For example, the first identification pattern 759 may include information regarding error correction, a mapping of that error correction may be stored in the memory, and the processor may process an error and correct the error based on the mapping of the error correction stored in the memory.

In one embodiment, once the device control circuit 305 determines the first unique identifier 983 at DETERMINE FIRST UNIQUE IDENTIFIER OPERATION 1115, process flow proceeds to SENSE SECOND INVISIBLE LIGHT OPERATION 1117.

In one embodiment, at SENSE SECOND INVISIBLE LIGHT OPERATION 1117, the second invisible light 329 is sensed by the invisible light sensor 307 coupled to the device housing 302 of the device 301. In one embodiment, the invisible light sensor 307 is configured to sense invisible light within the invisible light spectrum emitted by the second invisible light source 323. In one embodiment, the second invisible light source 323 emits infrared light, and the invisible light sensor 307 senses such infrared light.

In one embodiment, once the second invisible light 329 is sensed by the invisible light sensor 307 at SENSE SECOND INVISIBLE LIGHT OPERATION 1117, process flow proceeds to DETECT SECOND IDENTIFICATION PATTERN OPERATION 1119.

In one embodiment, at DETECT SECOND IDENTIFICATION PATTERN OPERATION 1119, the device control circuit 305 detects the second identification pattern 759 of the second invisible light 329 sensed by the invisible light sensor 307. In one embodiment, the device control circuit 305 is coupled to the device housing 302 of the device 301. In one embodiment, the device control circuit 305 is electronically coupled to the invisible light sensor 307. In one embodiment, the device control circuit 305 controls the invisible light sensor 307 to sense invisible light.

In one embodiment, once the device control circuit 305 detects the second identification pattern 759 at DETECT SECOND IDENTIFICATION PATTERN OPERATION 1119, process flow proceeds to DETERMINE SECOND UNIQUE IDENTIFIER OPERATION 1121.

In one embodiment, at DETERMINE SECOND UNIQUE IDENTIFIER OPERATION 1121, the device control circuit 305 determines the second unique identifier 983 based on the second identification pattern 759. In one embodiment, the second unique identifier of DETERMINE SECOND UNIQUE IDENTIFIER OPERATION 1121 is distinct from the first unique identifier of DETERMINE FIRST UNIQUE IDENTIFIER OPERATION 1115. In one embodiment, the device 301 includes a processor utilized by the device control circuit 305 to determine the second unique identifier 983. In one embodiment, the device 301 includes memory utilized by the device control circuit 305 to determine the second unique identifier 983. For example, the second identification pattern 759 may include information regarding error correction, a mapping of that error correction may be stored in the memory, and the processor may process an error and correct the error based on the mapping of the error correction stored in the memory.

In one embodiment, once the device control circuit 305 determines the second unique identifier 983 at DETERMINE SECOND UNIQUE IDENTIFIER OPERATION 1121, process flow proceeds to EXIT OPERATION 1123.

In one embodiment, at EXIT OPERATION 1123, the process 1100 for unique identifier detection is exited.

In one embodiment, the process 1100 includes additional objects such as a third object 111N. In this embodiment, a third object control circuit 115N supplies third pattern power 780 from a third power supply 754 to a third invisible light source 113N. In this embodiment, third invisible light 119N corresponding to a third identification pattern 759 is emitted from the third invisible light source 113N. In this embodiment, the invisible light sensor 107 of the device 101 senses the third invisible light 119N emitted by the third object 111N. In this embodiment, the device control circuit 305 of the device 101 detects the third identification pattern 759 and determines a third unique identifier 983 based on the third identification pattern 759. It is to be understood that any number of objects 111A and 111B through 111N can be included in the process 1100.

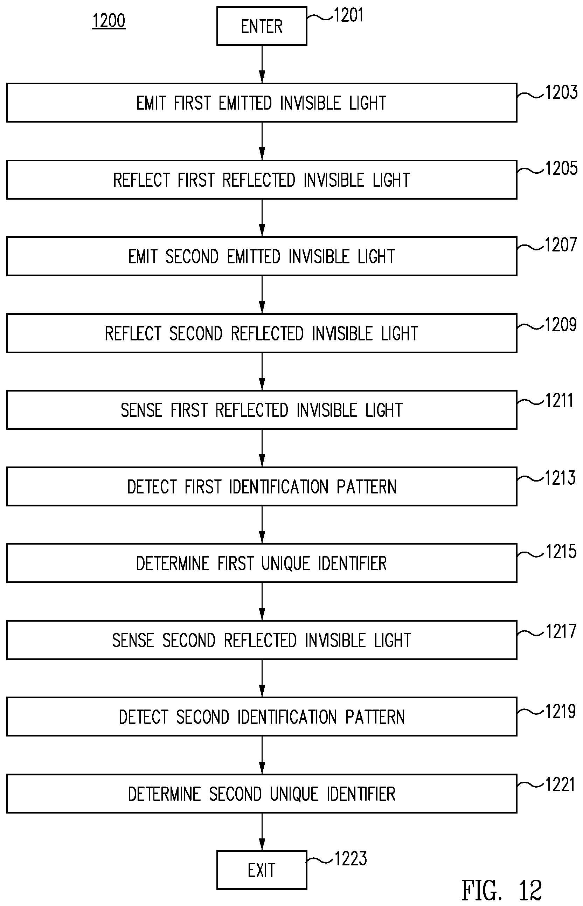

FIG. 12 is a flow diagram of a process 1200 for unique identifier detection, in accordance with one embodiment. Referring to FIGS. 2, 4, 6, 8, 10, and 12 together, the process 1200 for unique identifier detection begins at ENTER OPERATION 1201 and process flow proceeds to EMIT FIRST EMITTED INVISIBLE LIGHT OPERATION 1203.

In one embodiment, at EMIT FIRST EMITTED INVISIBLE LIGHT OPERATION 1203, the first emitted invisible light 418 is emitted from the invisible light source 403 coupled to the device housing 402 of the device 401. In one embodiment, the invisible light source 403 is an infrared light source. In one embodiment, the first emitted invisible light 418 is first emitted infrared light. In one embodiment, the invisible light source 403 comprises one or more light emitting diodes (LED) that emit invisible light, such as infrared light. In one embodiment, the invisible light source 403 is powered by the device power supply 404 and controlled by the device control circuit 405.

In one embodiment, once the first emitted invisible light 418 is emitted from the invisible light source 403 at EMIT FIRST EMITTED INVISIBLE LIGHT OPERATION 1203, process flow proceeds to REFLECT FIRST REFLECTED INVISIBLE LIGHT OPERATION 1205.

In one embodiment, at REFLECT FIRST REFLECTED INVISIBLE LIGHT OPERATION 1205, the first reflected invisible light 419 is reflected by the first invisible light reflective coating 416. In one embodiment, the first invisible light reflective coating 416 is coupled to the first object housing 412 of the first object 411. In one embodiment, the first invisible light reflective coating 416 receives the first emitted invisible light 418, which is reflected as the first reflected invisible light 419. In one embodiment, the first invisible light reflective coating 416 corresponds to a first identification pattern 859. In one embodiment, the first invisible light reflective coating 416 comprises material that is reflective of the first emitted invisible light 418 emitted by the invisible light source 403. In one embodiment, the first invisible light reflective coating 416 is coupled to the first object housing 412 via a first adhesive tag 417 coupled to the first object housing 412.

In one embodiment, once the first reflected invisible light 419 is reflected by the first invisible light reflective coating 416 at REFLECT FIRST REFLECTED INVISIBLE LIGHT OPERATION 1205, process flow proceeds to EMIT SECOND EMITTED INVISIBLE LIGHT OPERATION 1207.

In one embodiment, at EMIT SECOND EMITTED INVISIBLE LIGHT OPERATION 1207, the second emitted invisible light 428 is emitted from the invisible light source 403 coupled to the device housing 402 of the device 401. In one embodiment, the invisible light source 403 is an infrared light source. In one embodiment, the second emitted invisible light 428 is second emitted infrared light. In one embodiment, the invisible light source 403 comprises one or more light emitting diodes (LED) that emit invisible light, such as infrared light. In one embodiment, the invisible light source 403 is powered by the device power supply 404 and controlled by the device control circuit 405.

In one embodiment, once the second emitted invisible light 428 is emitted from the invisible light source 403 at EMIT SECOND EMITTED INVISIBLE LIGHT OPERATION 1207, process flow proceeds to REFLECT SECOND REFLECTED INVISIBLE LIGHT OPERATION 1209.

In one embodiment, at REFLECT SECOND REFLECTED INVISIBLE LIGHT OPERATION 1209, the second reflected invisible light 429 is reflected by the second invisible light reflective coating 426. In one embodiment, the second invisible light reflective coating 426 is coupled to the second object housing 422 of the second object 421. In one embodiment, the second invisible light reflective coating 426 receives the second emitted invisible light 428, which is reflected as the second reflected invisible light 429. In one embodiment, the second invisible light reflective coating 426 corresponds to a second identification pattern 859. In one embodiment, the second identification pattern of REFLECT SECOND REFLECTED INVISIBLE LIGHT OPERATION 1209 is distinct from the first identification pattern of REFLECT FIRST REFLECTED INVISIBLE LIGHT OPERATION 1205. In one embodiment, the second invisible light reflective coating 426 comprises material that is reflective of the second emitted invisible light 428 emitted by the invisible light source 403. In one embodiment, the second invisible light reflective coating 426 is coupled to the second object housing 422 via a second adhesive tag 427 coupled to the second object housing 422.

In one embodiment, once the second reflected invisible light 429 is reflected by the second invisible light reflective coating 426 at REFLECT SECOND REFLECTED INVISIBLE LIGHT OPERATION 1209, process flow proceeds to SENSE FIRST REFLECTED INVISIBLE LIGHT OPERATION 1211.

In one embodiment, at SENSE FIRST REFLECTED INVISIBLE LIGHT OPERATION 1211, the first reflected invisible light 419 is sensed by the invisible light sensor 407 coupled to the device housing 402 of the device 401. In one embodiment, the invisible light sensor 407 is configured to sense invisible light within the invisible light spectrum emitted by the invisible light source 403. In one embodiment, the invisible light source 403 emits infrared light, and the invisible light sensor 407 senses such infrared light reflected by the first invisible light reflective coating 416.

In one embodiment, once the first reflected invisible light 419 is sensed by the invisible light sensor 407 at SENSE FIRST REFLECTED INVISIBLE LIGHT OPERATION 1211, process flow proceeds to DETECT FIRST IDENTIFICATION PATTERN OPERATION 1213.

In one embodiment, at DETECT FIRST IDENTIFICATION PATTERN OPERATION 1213, the device control circuit 405 detects the first identification pattern 859 of the first reflected invisible light 419 sensed by the invisible light sensor 407. In one embodiment, the device control circuit 405 is coupled to the device housing 402 of the device 401. In one embodiment, the device control circuit 405 is electronically coupled to the invisible light sensor 407. In one embodiment, the device control circuit 405 controls the invisible light sensor 407 to sense invisible light.

In one embodiment, once the device control circuit 405 detects the first identification pattern 859 of the first reflected invisible light 419 at DETECT FIRST IDENTIFICATION PATTERN OPERATION 1213, process flow proceeds to DETERMINE FIRST UNIQUE IDENTIFIER OPERATION 1215.

In one embodiment, at DETERMINE FIRST UNIQUE IDENTIFIER OPERATION 1215, the device control circuit 405 determines the first unique identifier 1083 based on the first identification pattern 859. In one embodiment, the device 401 includes a processor utilized by the device control circuit 405 to determine the first unique identifier 1083. In one embodiment, the device 401 includes memory utilized by the device control circuit 405 to determine the first unique identifier 1083. For example, the first identification pattern 859 may include information regarding error correction, a mapping of that error correction may be stored in the memory, and the processor may process an error and correct the error based on the mapping of the error correction stored in the memory.

In one embodiment, once the device control circuit 405 determines the first unique identifier 1083 at DETERMINE FIRST UNIQUE IDENTIFIER OPERATION 1215, process flow proceeds to SENSE SECOND REFLECTED INVISIBLE LIGHT OPERATION 1217.

In one embodiment, at SENSE SECOND REFLECTED INVISIBLE LIGHT OPERATION 1217, the second reflected invisible light 429 is sensed by the invisible light sensor 407 coupled to the device housing 402 of the device 401. In one embodiment, the invisible light sensor 407 is configured to sense invisible light within the invisible light spectrum emitted by the invisible light source 403. In one embodiment, the invisible light source 403 emits infrared light, and the invisible light sensor 407 senses such infrared light reflected by the second invisible light reflective coating 426.

In one embodiment, once the second reflected invisible light 429 is sensed by the invisible light sensor 407 at SENSE SECOND REFLECTED INVISIBLE LIGHT OPERATION 1217, process flow proceeds to DETECT SECOND IDENTIFICATION PATTERN OPERATION 1219.

In one embodiment, at DETECT SECOND IDENTIFICATION PATTERN OPERATION 1219, the device control circuit 405 detects the second identification pattern 859 of the second reflected invisible light 429 sensed by the invisible light sensor 407. In one embodiment, the device control circuit 405 is coupled to the device housing 402 of the device 401. In one embodiment, the device control circuit 405 is electronically coupled to the invisible light sensor 407. In one embodiment, the device control circuit 405 controls the invisible light sensor 407 to sense invisible light.

In one embodiment, once the device control circuit 405 detects the second identification pattern 859 at DETECT SECOND IDENTIFICATION PATTERN OPERATION 1219, process flow proceeds to DETERMINE SECOND UNIQUE IDENTIFIER OPERATION 1221.

In one embodiment, at DETERMINE SECOND UNIQUE IDENTIFIER OPERATION 1221, the device control circuit 405 determines the second unique identifier 1083 based on the second identification pattern 859. In one embodiment, the second unique identifier of DETERMINE SECOND UNIQUE IDENTIFIER OPERATION 1221 is distinct from the first unique identifier of DETERMINE FIRST UNIQUE IDENTIFIER OPERATION 1215. In one embodiment, the device 401 includes a processor utilized by the device control circuit 405 to determine the second unique identifier 1083. In one embodiment, the device 401 includes memory utilized by the device control circuit 405 to determine the second unique identifier 1083. For example, the second identification pattern 859 may include information regarding error correction, a mapping of that error correction may be stored in the memory, and the processor may process an error and correct the error based on the mapping of the error correction stored in the memory.

In one embodiment, once the device control circuit 405 determines the second unique identifier 1083 at DETERMINE SECOND UNIQUE IDENTIFIER OPERATION 1221, process flow proceeds to EXIT OPERATION 1223.

In one embodiment, at EXIT OPERATION 1223, the process 1200 for unique identifier detection is exited.

In one embodiment, the process 1200 includes additional objects such as a third object 211N. In this embodiment, the invisible light source 203 emits third emitted invisible light 218N. In this embodiment, the third invisible light reflective coating 216N reflects third reflected invisible light 219N. In this embodiment, the third invisible light reflective coating 216N is coupled to a third object housing 212N of a third object 211N. In this embodiment, the third invisible light reflective coating 216N has a corresponding third identification pattern 859. In this embodiment, the invisible light sensor 207 of the device 201 senses the third reflected invisible light 219N. In this embodiment, the device control circuit 405 of the device 201 detects the third identification pattern 859 and determines a third unique identifier 1083 based on the third identification pattern 859. It is to be understood that any number of objects 211A and 211B through 211N can be included in the process 1200.

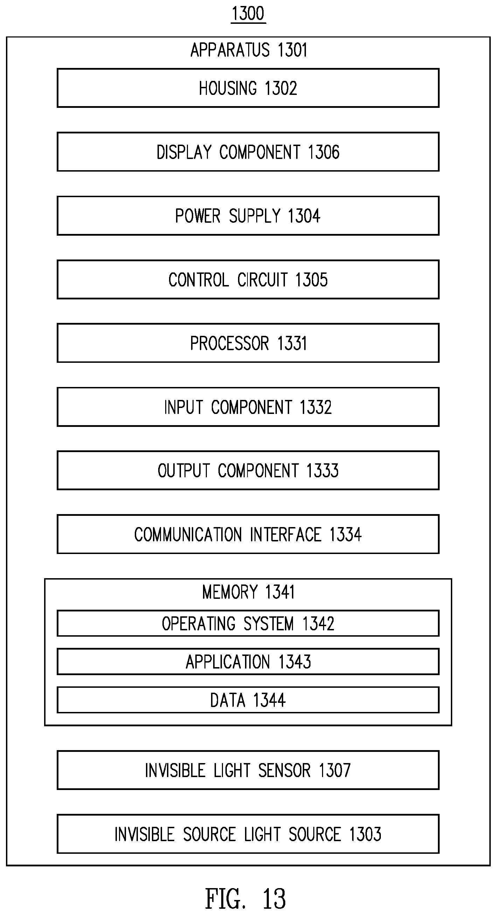

FIG. 13 is a block diagram of an apparatus 1301 of a unique identifier detection system 1300, in accordance with one embodiment. It is to be understood that certain components of the apparatus 1301 are optional. In one embodiment, the apparatus 1301 is a device, such as the device 301 of FIG. 3 and the device 401 of FIG. 4. For example, the apparatus 1301 may be an electronic device such as a smartphone used to identify objects. In one embodiment, the apparatus 1301 is an object, such as the first object 311 of FIG. 3 and the first object 411 of FIG. 4. For example, the apparatus 1301 may be an electronic object such as an Internet of Things (IoT) object.

The apparatus 1301 may be implemented as any of a number of electronic apparatuses, such as a tablet computing device, a smartphone, a media player, a portable gaming device, a portable digital assistant, a laptop computer, a desktop computer, and other electronic apparatuses, as discussed herein, or as known in the art at the time of filing, or as developed, or becomes available, after the time of filing. It should be understood that various types of computing components, including a processor, a memory, and a user interface for receiving user input and displaying user output, can be used in accordance with various embodiments discussed herein.

In one embodiment, the apparatus 1301 includes a housing 1302, to which various components may be housed. In one embodiment, the housing 1302 corresponds to the device housing 302 of the device 301 of FIG. 3 and the device housing 402 of the device 401 of FIG. 4. In one embodiment, the housing 1302 corresponds to the first object housing 312 of the first object 311 of FIG. 3 and the first object housing 412 of the first object 411 of FIG. 4.

In one embodiment, the apparatus 1301 includes a display component 1306. In one embodiment, the display component 1306 includes, for example, cathode ray tubes (CRTs), liquid crystal display (LCD) screens, gas plasma-based flat panel displays, LCD projectors, or other types of display components, as discussed herein, or as known in the art at the time of filing, or as developed, or becomes available, after the time of filing. In one embodiment, the display component 1306 corresponds to the display component 306 of the device 301 of FIG. 3 and the display component 406 of the device 401 of FIG. 4.

In one embodiment, the apparatus 1301 includes one or more input components 1332 operable to receive inputs from a user. In one embodiment, the input components 1332 include, for example, a push button, touch pad, touch screen, wheel, joystick, keyboard, mouse, trackball, keypad, accelerometer, light gun, game controller, or any other such component with which a user can provide inputs, as discussed herein, or as known in the art at the time of filing, or as developed, or becomes available, after the time of filing. In one embodiment, the input component 1332 is incorporated into the apparatus 1301. In one embodiment, the input component 1332 is operably coupled to the apparatus 1301 via a wired or wireless interface. In one embodiment, for an apparatus 1301 with a touch sensitive display, the input component 1332 includes a touch sensor that operates in conjunction with the display component 1306 to permit users to interact with the image displayed by the display component 1306 using touch inputs (e.g., with a finger or stylus). In one embodiment, the apparatus 1301 includes one or more output components 1333, such as one or more audio speakers.

In one embodiment, the apparatus 1301 includes a communication interface 1334, comprising one or more wireless components operable to communicate with one or more separate apparatuses within a communication range of the particular wireless protocol. The wireless protocol can be any appropriate protocol used to enable apparatuses to communicate wirelessly, such as Bluetooth, cellular, IEEE 802.11, infrared communications protocols, such as an IrDA-compliant protocol, and other protocols, as discussed herein, or as known in the art at the time of filing, or as developed, or becomes available, after the time of filing. In one embodiment, the apparatus 1301 includes one or more wired communications interfaces for coupling and communicating with other apparatuses.

In one embodiment, the apparatus 1301 includes a power supply 1304, such as, for example, a rechargeable battery operable to be recharged through conventional plug-in approaches, or through other approaches such as capacitive charging. In one embodiment, the power supply 1304 includes a user switch with which the user can turn the apparatus 1301 on and off. In one embodiment, the power supply 1304 corresponds to the device power supply 304 of the device 301 of FIG. 3 and the device power supply 404 of the device 401 of FIG. 4. In one embodiment, the power supply 1304 corresponds to the first object power supply 314 of the first object 311 of FIG. 3. In one embodiment, the apparatus 1301 includes a control circuit 1305, as discussed herein, or as known in the art at the time of filing, or as developed, or becomes available, after the time of filing. In one embodiment, the control circuit 1305 corresponds to the device control circuit 305 of the device 301 of FIG. 3 and the device control circuit 405 of the device 401 of FIG. 4. In one embodiment, the control circuit 1305 corresponds to the first object control circuit 315 of the first object 311 of FIG. 3.

In one embodiment, the apparatus 1301 includes a processor 1331 for executing instructions and retrieving data stored in a memory 1341. In one embodiment, the memory 1341 includes one or more different types of memory, data storage or computer-readable storage media, such as, for example, a first data storage for program instructions for execution by the processor 1331, and a second data storage for images or data and/or a removable storage for transferring data to other devices. In one embodiment, the memory 1341 stores software for execution by the processor 1331, such as, for example, operating system software 1342 and application software 1343. In one embodiment, the memory 1341 stores a data item 1344, such as, for example, data files corresponding to one or more applications 1343.

In one embodiment, the apparatus 1301 includes an invisible light sensor 1307, as discussed herein, or as known in the art at the time of filing, or as developed, or becomes available, after the time of filing. In one embodiment, the invisible light sensor 1307 corresponds to the invisible light sensor 307 of the device 301 of FIG. 3 and the invisible light sensor 407 of the device 401 of FIG. 4. In one embodiment, the apparatus 1301 includes an invisible light source 1303, as discussed herein, or as known in the art at the time of filing, or as developed, or becomes available, after the time of filing. In one embodiment, the invisible light source 1303 corresponds to the first invisible light source 313 of the first object 311 of FIG. 3. In one embodiment, the invisible light source 1303 corresponds to the invisible light source 403 of the device 401 of FIG. 4.

### TERM DEFINITIONS

Various embodiments of systems and methods described herein include one or more computers, which may also be referred to herein as systems, computing systems or processors. As used herein the term computer includes any programmable machine or machines capable of performing arithmetic and/or logical operations. In various embodiments, computers include one or more of processors, memories, data storage devices, and/or other components as discussed herein, and/or as known in the art. In various embodiments, these components are connected physically or through network or wireless links. In various embodiments, computers include software which directs the operations of the aforementioned components. In various embodiments, the software can thereby transform the aforementioned computers and components into special purpose computers and components.

Herein, computers may also be referred to with terms that are commonly used by those of ordinary skill in the relevant arts, such as servers, PCs, mobile devices, routers, switches, data centers, distributed computers, and other terms. In various embodiments, computers facilitate communications between users and/or other computers, provide databases, perform analysis and/or transformation of data, and/or perform other functions. It will be understood by those of ordinary skill that those terms used herein are interchangeable, and any computer capable of performing the described functions may be used.

In various embodiments, computers may be linked to one another via a network or networks. In various embodiments, a network is any plurality of completely or partially interconnected computers wherein some or all of the computers are able to communicate with one another. It will be understood by those of ordinary skill that connections between computers may be wired in some cases (e.g., via Ethernet, coaxial, optical, or other wired connection) or may be wireless (e.g., via Wi-Fi, WiMax, or other wireless connections). In various embodiments, connections between computers may use any protocols, including connection-oriented protocols such as TCP or connectionless protocols such as UDP. Any connection through which at least two computers may exchange data can be the basis of a network.

Herein, the term "production environment" includes the various components, or assets, used to deploy, implement, access, and use, a given application as that application is intended to be used. In various embodiments, production environments include multiple computers and/or assets that are combined, communicatively coupled, virtually and/or physically connected, and/or associated with one another, to provide the production environment implementing the application.

As used herein, the term "computing environment" includes, but is not limited to, a logical or physical grouping of connected or networked computing systems and/or virtual assets using the same infrastructure and systems such as, but not limited to, hardware systems, software systems, and networking/communications systems. The hardware systems may employ processing logic that includes one or more processors, microprocessors, multi-core processors, and/or Field Programmable Gate Arrays (FPGAs) to execute operations disclosed herein. One or more memory (volatile and/or non-volatile) may be communicatively coupled to the processing logic to store instructions to execute operations and/or store data. Typically, computing environments are either known, "trusted" environments or unknown, "untrusted" environments. Typically, trusted computing environments are those where the assets, infrastructure, communication and networking systems, and security systems associated with the computing systems and/or virtual assets making up the trusted computing environment, are either under the control of, or known to, a party.

In various embodiments, each computing environment includes allocated assets and virtual assets associated with, and controlled or used to create, and/or deploy, and/or operate an application.

Herein, a data management system can be, but is not limited to, any system or application implemented on a computing system, accessed through one or more servers, accessed through a network, accessed through a cloud, and/or provided through any system or by any means, as discussed herein, and/or as known in the art, that gathers data from one or more sources and/or has the capability to analyze and categorize at least part of the data.

Herein, a financial management system can be, but is not limited to, any data management system implemented on a computing system, accessed through one or more servers, accessed through a network, accessed through a cloud, and/or provided through any system or by any means, as discussed herein, and/or as known in the art, that gathers financial data, including financial transactional data, from one or more sources and/or has the capability to analyze and categorize at least part of the financial data.

As used herein, the term financial management system includes, but is not limited to the following: computing system implemented, and/or online, and/or web-based, personal and/or business financial data management systems, services, packages, programs, modules, or applications; computing system implemented, and/or online, and/or web-based, personal and/or business tax preparation systems, services, packages, programs, modules, or applications; computing system implemented, and/or online, and/or web-based, personal and/or business accounting and/or invoicing systems, services, packages, programs, modules, or applications; and various other personal and/or business electronic data management systems, services, packages, programs, modules, or applications.

As used herein, the terms "artificial intelligence," "machine learning," and "machine learning algorithms" include, but are not limited to, machine learning algorithms for predictive model training operations such as one or more of artificial intelligence operations, regression, logistic regression, decision trees, artificial neural networks, support vector machines, linear regression, nearest neighbor methods, distance based methods, naive Bayes, linear discriminant analysis, k-nearest neighbor algorithm, another query classifier, and any other predictive model training operations, according to one embodiment.

As used herein, the terms "user," "client," and "customer" include, but are not limited to, any party, parties, entity, or entities using, or otherwise interacting with any of the methods or systems discussed herein. For instance, in various embodiments, a user can be, but is not limited to, a person, a commercial entity, an application, a service, or a computing system.

As used herein, the term "user system" includes, but is not limited to, the following: a computing system; a computing device; a computing entity; a server; a workstation; a desktop computing system; a mobile computing system, including, but not limited to, one or more of smart phones, portable devices, and devices worn or carried by a user; or any device, subsystem, or mechanism that includes components that can execute all, or part, of any one of the processes or operations, as discussed herein, or as known in the art.

The present invention has been described in particular detail with respect to specific possible embodiments. Those of skill in the art will appreciate that the invention may be practiced in other embodiments within the scope of the appended claims. For example, the nomenclature used for components, capitalization of component designations and terms, the attributes, data structures, or any other programming or structural aspect is not significant, mandatory, or limiting, and the mechanisms that implement the invention or its features can have various different names, formats, and/or protocols. Further, the system and/or functionality of the invention may be implemented via various combinations of software and hardware, as described, or entirely in hardware elements. Also, particular divisions of functionality between the various components described herein are merely exemplary, and not mandatory or significant. Consequently, functions performed by a single component may, in other embodiments, be performed by multiple components, and functions performed by multiple components may, in other embodiments, be performed by a single component.

Some portions of the above description present the features of the present invention in terms of algorithms and symbolic representations of operations, or algorithm-like representations, of operations on information/data. These algorithmic and/or algorithm-like descriptions and representations are the means used by those of skill in the art to most effectively and efficiently convey the substance of their work to others of skill in the art. These operations, while described functionally or logically, are understood to be implemented by computer programs and/or computing systems. Furthermore, it has also proven convenient at times to refer to these arrangements of operations as steps or modules or by functional names, without loss of generality.

Unless specifically stated otherwise, as would be apparent from the above discussion, it is appreciated that throughout the above description, discussions utilizing terms such as "obtaining," "training," "extracting," "executing," "mapping," "analyzing," "providing," "enforcing," "monitoring," "generating," "defining," "determining," "calculating," "transforming," "correlating," "normalizing," "accessing," "analyzing," "obtaining," "identifying," "associating," "aggregating," "initiating," "collecting," "creating," "transferring," "storing," "searching," "comparing," "providing," "processing" etc., refer to the action and processes of a computing system or similar electronic device that manipulates and operates on data represented as physical (electronic) quantities within the computing system memories, resisters, caches or other information storage, transmission or display devices.

Certain aspects of the present invention include process steps or operations and instructions described herein an algorithmic and/or algorithmic-like form. It should be noted that the process steps and/or operations and instructions of the present invention can be embodied in software, firmware, and/or hardware, and when embodied in software, can be downloaded to reside on and be operated from different platforms used by real time network operating systems.

The present invention also relates to an apparatus or system for performing the operations described herein. This apparatus or system may be specifically constructed for the required purposes by a computer program stored via a computer program product as defined herein that can be accessed by a computing system or other device to transform the computing system or other device into a specifically and specially programmed computing system or another device.

Those of skill in the art will readily recognize that the algorithms and operations presented herein are not inherently related to any particular computing system, computer architecture, computer or industry standard, or any other specific apparatus. It may prove convenient/efficient to construct or transform one or more specialized apparatuses to perform the required operations described herein. The required structure for a variety of these systems will be apparent to those of skill in the art, along with equivalent variations. In addition, the present invention is not described with reference to any particular programming language and it is appreciated that a variety of programming languages may be used to implement the teachings of the present invention as described herein, and any references to a specific language or languages are provided for illustrative purposes only and for enablement of the contemplated best mode of the invention at the time of filing.

It should also be noted that the language used in the specification has been principally selected for readability, clarity, and instructional purposes, and may not have been selected to delineate or circumscribe the inventive subject matter. Accordingly, the disclosure of the present invention is intended to be illustrative, but not limiting, of the scope of the invention, which is set forth in the claims below.

In addition, the operations shown in the figures are identified using a particular nomenclature for ease of description and understanding, but other nomenclature is often used in the art to identify equivalent operations.

In the discussion above, certain aspects of one embodiment include process steps and/or operations and/or instructions described herein for illustrative purposes in a particular order and/or grouping. However, the particular order and/or grouping shown and discussed herein is illustrative only and not limiting. Those of skill in the art will recognize that other orders and/or grouping of the process steps and/or operations and/or instructions are possible and, in some embodiments, one or more of the process steps and/or operations and/or instructions discussed above can be combined and/or deleted. In addition, portions of one or more of the process steps and/or operations and/or instructions can be re-grouped as portions of one or more other of the process steps and/or operations and/or instructions discussed herein. Consequently, the particular order and/or grouping of the process steps and/or operations and/or instructions discussed herein does not limit the scope of the invention as claimed below.

## Claims

1. A unique identifier detection system, comprising:
a first object (311) comprising a first object housing (312);
a first invisible light source (313) coupled to the first object housing and configured to emit first invisible light (319) corresponding to a first identification pattern, wherein the first invisible light source comprises a plurality of invisible light emitters;
a first object power supply (314) coupled to the first object housing;
a first object control circuit (315) coupled to the first object housing, the first object control circuit electronically coupled to the first invisible light source and the first object power supply, the first object control circuit configured to supply first pattern power from the first object power supply to the first invisible light source, wherein the first pattern power corresponds to the first identification pattern;
a first opaque substrate (316) coupled to the first object housing, the first opaque substrate forming an enclosure within which the first invisible light source resides, and defining a plurality of apertures on different sides of the enclosure through which the first invisible light can pass;
a first transparent substrate (317) coupled to the first opaque substrate, the first transparent substrate being transparent to invisible light, the first transparent substrate maintaining the integrity of the first opaque substrate and forming a protective layer over the plurality of apertures on different sides of the enclosure defined by the first opaque substrate;
a second object (321) comprising a second object housing (322);
a second invisible light source (323) coupled to the second object housing and configured to emit second invisible light (329) corresponding to a second identification pattern, wherein the second identification pattern is distinct from the first identification pattern, and wherein the second invisible light source comprises a plurality of invisible light emitters;
a second object power supply (324) coupled to the second object housing;
a second object control circuit (325) coupled to the second object housing, the second object control circuit electronically coupled to the second invisible light source and the second object power supply, the second object control circuit configured to supply second pattern power from the second object power supply to the second invisible light source, wherein the second pattern power corresponds to the second identification pattern;
a second opaque substrate (326) coupled to the second object housing, the second opaque substrate forming an enclosure within which the second invisible light source resides, and defining a plurality of apertures through which the second invisible light can pass;
a second transparent substrate (317) coupled to the second opaque substrate, the second transparent substrate being transparent to invisible light, the second transparent substrate maintaining the integrity of the second opaque substrate and forming a protective layer over the plurality of apertures defined by the second opaque substrate;
a device (301) comprising a device housing (302);
an invisible light sensor (307) coupled to the device housing and configured to sense the first invisible light and to sense the second invisible light; and
a device control circuit (305) coupled to the device housing and electronically coupled to the invisible light sensor, the device control circuit configured to detect the first identification pattern of the first invisible light and to determine a first object unique identifier based on the first identification pattern, and configured to detect the second identification pattern of the second invisible light and to determine a second object unique identifier based on the second identification pattern,
wherein the first identification pattern comprises first sequenced pulsing invisible light emission, the first pattern power comprises first sequenced pulsing power, the second identification pattern comprises second sequenced pulsing invisible light emission, and the second pattern power comprises second sequenced pulsing power.

2. The system of claim 1, wherein the first identification pattern comprises first optical communication signals, the first pattern power comprises first optical communication signaling power, the second identification pattern comprises second optical communication signals, and the second pattern power comprises second optical communication signaling power.

3. The system of claim 1, wherein the first invisible light source comprises a first infrared light emitter, and the second invisible light source comprises a second infrared light emitter, and optionally wherein the first infrared light emitter comprises a first infrared light emitting diode, and the second infrared light emitter comprises a second infrared light emitting diode.

4. The system of claim 1, wherein the first identification pattern comprises a first fiducial marker pattern, the device control circuit is configured to determine a first start of the first identification pattern based on the first fiducial marker pattern, the second identification pattern comprises a second fiducial marker pattern, and the device control circuit is configured to determine a second start of the second identification pattern based on the second fiducial marker pattern.

5. A method for unique identifier detection, comprising:
supplying, by a first object control circuit (315) coupled to a first object housing (312) of a first object (311), first pattern power from a first object power supply to a first invisible light source (313), the first object power supply coupled to the first object housing and electronically coupled to the first object control circuit, the first invisible light source coupled to the first object housing and electronically coupled to the first object control circuit;
emitting first invisible light (319) from the first invisible light source, the first invisible light corresponding to a first identification pattern, the first pattern power corresponding to the first identification pattern, wherein the first invisible light source comprises a plurality of invisible light emitters;
wherein a first opaque substrate (316) is coupled to the first object housing, the first opaque substrate forming an enclosure within which the first invisible light source resides, and defining a plurality of apertures on different sides of the enclosure through which the first invisible light can pass; and
wherein a first transparent substrate (317) is coupled to the first opaque substrate, the first transparent substrate being transparent to invisible light, the first transparent substrate maintaining the integrity of the first opaque substrate and forming a protective layer over the plurality of apertures defined by the first opaque substrate;
supplying, by a second object control circuit (325) coupled to a second object housing (322) of a second object (321), second pattern power from a second object power supply (324) to a second invisible light source (323), the second object power supply coupled to the second object housing and electronically coupled to the second object control circuit, the second invisible light source coupled to the second object housing and electronically coupled to the second object control circuit;
emitting second invisible light (329) from the second invisible light source, the second invisible light corresponding to a second identification pattern, the second pattern power corresponding to the second identification pattern, the second identification pattern distinct from the first identification pattern, wherein the second invisible light source comprises a plurality of invisible light emitters;
wherein a second opaque substrate (326) is coupled to the second object housing, the second opaque substrate forming an enclosure within which the second invisible light source resides, and defining a plurality of apertures on different sides of the enclosure through which the second invisible light can pass; and
wherein a second transparent substrate (317) is coupled to the second opaque substrate, the second transparent substrate being transparent to invisible light, the second transparent substrate maintaining the integrity of the second opaque substrate and forming a protective layer over the plurality of apertures defined by the second opaque substrate;
sensing the first invisible light by an invisible light sensor (307) coupled to a device housing (302) of a device (301);
detecting the first identification pattern of the first invisible light by a device control circuit coupled to the device housing and electronically coupled to the invisible light sensor;
determining a first unique identifier based on the first identification pattern by the device control circuit;
sensing the second invisible light by the invisible light sensor coupled to the device housing of the device;
detecting the second identification pattern of the second invisible light by the device control circuit coupled to the device housing and electronically coupled to the invisible light sensor; and
determining a second unique identifier based on the second identification pattern by the device control circuit,
wherein the first identification pattern comprises first sequenced pulsing invisible light emission, the first pattern power comprises first sequenced pulsing power, the second identification pattern comprises second sequenced pulsing invisible light emission, and the second pattern power comprises second sequenced pulsing power.

6. The method of claim 5, further comprising:
supplying, by a third object control circuit coupled to a third object housing of a third object, third pattern power from a third power supply to a third invisible light source, the third power supply coupled to the third object housing and electronically coupled to the third object control circuit, the third invisible light source coupled to the third object housing and electronically coupled to the third object control circuit;
emitting third invisible light from the third invisible light source, the third invisible light corresponding to a third identification pattern, the third pattern power corresponding to the third identification pattern, the third identification pattern distinct from the second identification pattern and the first identification pattern;
sensing the third invisible light by the invisible light sensor coupled to the device housing of the device;
detecting the third identification pattern of the third invisible light by the device control circuit coupled to the device housing and electronically coupled to the invisible light sensor; and
determining a third unique identifier based on the first identification pattern by the device control circuit.

7. The method of claim 5, wherein the first invisible light source comprises a first infrared light emitter, material of the first opaque substrate is opaque to infrared light emitted by the first infrared light emitter, the second invisible light source comprises a second infrared light emitter, and material of the second opaque substrate is opaque to infrared light emitted by the second infrared light emitter, and optionally wherein the first infrared light emitter comprises a first infrared light emitting diode, and the second infrared light emitter comprises a second infrared light emitting diode.

## Patentansprüche

1. System zur Erkennung eines eindeutigen Identifikators, umfassend:
ein erstes Objekt (311), das ein erstes Objektgehäuse (312) umfasst;
eine erste Quelle unsichtbaren Lichts (313), die mit dem ersten Objektgehäuse gekoppelt und dazu ausgelegt ist, erstes unsichtbares Licht (319) zu emittieren, das einem ersten Identifikationsmuster entspricht, wobei die erste Quelle unsichtbaren Lichts eine Mehrzahl von Emittern unsichtbaren Lichts umfasst;
eine erste Objektleistungsversorgung (314), die mit dem ersten Objektgehäuse gekoppelt ist;
eine erste Objektsteuerschaltung (315), die mit dem ersten Objektgehäuse gekoppelt ist, wobei die erste Objektsteuerschaltung elektronisch mit der ersten Quelle unsichtbaren Lichts und der ersten Objektleistungsversorgung gekoppelt ist, wobei die erste Objektsteuerschaltung dazu ausgelegt ist, die erste Quelle unsichtbaren Lichts mit einer ersten Musterleistung von der ersten Objektleistungsversorgung zu versorgen, wobei die erste Musterleistung dem ersten Identifikationsmuster entspricht;
ein erstes undurchlässiges Substrat (316), das mit dem ersten Objektgehäuse gekoppelt ist, wobei das erste undurchlässige Substrat eine Einfassung bildet, innerhalb derer sich die erste Quelle unsichtbaren Lichts befindet, und eine Mehrzahl von Öffnungen auf verschiedenen Seiten der Einfassung definiert, durch die das erste unsichtbare Licht hindurchtreten kann;
ein erstes durchlässiges Substrat (317), das mit dem ersten undurchlässigen Substrat gekoppelt ist, wobei das erste durchlässige Substrat für unsichtbares Licht durchlässig ist, wobei das erste durchlässige Substrat die Integrität des ersten undurchlässigen Substrats aufrechterhält und eine Schutzschicht über der Mehrzahl von Öffnungen auf verschiedenen Seiten der Einfassung bildet, die durch das erste undurchlässige Substrat definiert ist;
ein zweites Objekt (321), das ein zweites Objektgehäuse (322) umfasst;
eine zweite Quelle unsichtbaren Lichts (323), die mit dem zweiten Objektgehäuse gekoppelt und dazu ausgelegt ist, zweites unsichtbares Licht (329) zu emittieren, das einem zweiten Identifikationsmuster entspricht, wobei sich das zweite Identifikationsmuster von dem ersten Identifikationsmuster unterscheidet und wobei die zweite Quelle unsichtbaren Lichts eine Mehrzahl von Emittern unsichtbaren Lichts umfasst;
eine zweite Objektleistungsversorgung (324), die mit dem zweiten Objektgehäuse gekoppelt ist;
eine zweite Objektsteuerschaltung (325), die mit dem zweiten Objektgehäuse gekoppelt ist, wobei die zweite Objektsteuerschaltung elektronisch mit der zweiten Quelle unsichtbaren Lichts und der zweiten Objektleistungsversorgung gekoppelt ist, wobei die zweite Objektsteuerschaltung dazu ausgelegt ist, die zweite Quelle unsichtbaren Lichts mit einer zweiten Musterleistung von der zweiten Objektleistungsversorgung zu versorgen, wobei die zweite Musterleistung dem zweiten Identifikationsmuster entspricht;
ein zweites undurchlässiges Substrat (326), das mit dem zweiten Objektgehäuse gekoppelt ist, wobei das zweite undurchlässige Substrat eine Einfassung bildet, innerhalb derer sich die zweite Quelle unsichtbaren Lichts befindet, und eine Mehrzahl von Öffnungen definiert, durch die das zweite unsichtbare Licht hindurchtreten kann;
ein zweites durchlässiges Substrat (317), das mit dem zweiten undurchlässigen Substrat gekoppelt ist, wobei das zweite durchlässige Substrat für unsichtbares Licht durchlässig ist, wobei das zweite durchlässige Substrat die Integrität des zweiten undurchlässigen Substrats aufrechterhält und eine Schutzschicht über der Mehrzahl von Öffnungen bildet, die durch das zweite undurchlässige Substrat definiert ist;
eine Vorrichtung (301), die ein Vorrichtungsgehäuse (302) umfasst;
einen Sensor für unsichtbares Licht (307), der mit dem Vorrichtungsgehäuse gekoppelt und dazu ausgelegt ist, das erste unsichtbare Licht zu erfassen und das zweite unsichtbare Licht zu erfassen; und
eine Vorrichtungssteuerschaltung (305), die mit dem Vorrichtungsgehäuse gekoppelt und elektronisch mit dem Sensor für unsichtbares Licht gekoppelt ist, wobei die Vorrichtungssteuerschaltung dazu ausgelegt ist, das erste Identifikationsmuster des ersten unsichtbaren Lichts zu erkennen und einen ersten objekteindeutigen Identifikator basierend auf dem ersten Identifikationsmuster zu bestimmen, und dazu ausgelegt ist, das zweite Identifikationsmuster des zweiten unsichtbaren Lichts zu erkennen und einen zweiten objekteindeutigen Identifikator basierend auf dem zweiten Identifikationsmuster zu bestimmen,
wobei das erste Identifikationsmuster eine erste sequenzierte pulsierende Emission unsichtbaren Lichts umfasst, die erste Musterleistung eine erste sequenzierte Pulsleistung umfasst, das zweite Identifikationsmuster eine zweite sequenzierte pulsierende Emission unsichtbaren Lichts umfasst und die zweite Musterleistung eine zweite sequenzierte Pulsleistung umfasst.

2. System nach Anspruch 1, wobei das erste Identifikationsmuster erste optische Kommunikationssignale umfasst, die erste Musterleistung eine erste optische Kommunikationssignalisierungsleistung umfasst, das zweite Identifikationsmuster zweite optische Kommunikationssignale umfasst und die zweite Musterleistung eine zweite optische Kommunikationssignalisierungsleistung umfasst.

3. System nach Anspruch 1, wobei die erste Quelle unsichtbaren Lichts einen ersten Infrarotlichtemitter umfasst und die zweite Quelle unsichtbaren Lichts einen zweiten Infrarotlichtemitter umfasst, und wobei optional der erste Infrarotlichtemitter eine erste Infrarot-Leuchtdiode umfasst und der zweite Infrarotlichtemitter eine zweite Infrarot-Leuchtdiode umfasst.

4. System nach Anspruch 1, wobei das erste Identifikationsmuster ein erstes Passermarkenmuster umfasst, die Vorrichtungssteuerschaltung dazu ausgelegt ist, einen ersten Anfang des ersten Identifikationsmusters basierend auf dem ersten Passermarkenmuster zu bestimmen, das zweite Identifikationsmuster ein zweites Passermarkenmuster umfasst und die Vorrichtungssteuerschaltung dazu ausgelegt ist, einen zweiten Anfang des zweiten Identifikationsmusters basierend auf dem zweiten Passermarkenmuster zu bestimmen.

5. Verfahren zur Erkennung eines eindeutigen Identifikators, umfassend:
Versorgen einer ersten Quelle unsichtbaren Lichts (313) durch eine erste Objektsteuerschaltung (315), die mit einem ersten Objektgehäuse (312) eines ersten Objekts (311) gekoppelt ist, mit einer ersten Musterleistung von einer ersten Objektleistungsversorgung, wobei die erste Objektleistungsversorgung mit dem ersten Objektgehäuse gekoppelt ist und elektronisch mit der ersten Objektsteuerschaltung gekoppelt ist, wobei die erste Quelle unsichtbaren Lichts mit dem ersten Objektgehäuse gekoppelt ist und elektronisch mit der ersten Objektsteuerschaltung gekoppelt ist;
Emittieren ersten unsichtbaren Lichts (319) von der ersten Quelle unsichtbaren Lichts, wobei das erste unsichtbare Licht einem ersten Identifikationsmuster entspricht, wobei die erste Musterleistung dem ersten Identifikationsmuster entspricht, wobei die erste Quelle unsichtbaren Lichts eine Mehrzahl von Emittern unsichtbaren Lichts umfasst;
wobei ein erstes undurchlässiges Substrat (316) mit dem ersten Objektgehäuse gekoppelt ist, wobei das erste undurchlässige Substrat eine Einfassung bildet, innerhalb derer sich die erste Quelle unsichtbaren Lichts befindet, und eine Mehrzahl von Öffnungen auf verschiedenen Seiten der Einfassung definiert, durch die das erste unsichtbare Licht hindurchtreten kann; und
wobei ein erstes durchlässiges Substrat (317) mit dem ersten undurchlässigen Substrat gekoppelt ist, wobei das erste durchlässige Substrat für unsichtbares Licht durchlässig ist, wobei das erste durchlässige Substrat die Integrität des ersten undurchlässigen Substrats aufrechterhält und eine Schutzschicht über der Mehrzahl von Öffnungen bildet, die durch das erste undurchlässige Substrat definiert ist;
Versorgen einer zweiten Quelle unsichtbaren Lichts (323) durch eine zweite Objektsteuerschaltung (325), die mit einem zweiten Objektgehäuse (322) eines zweiten Objekts (321) gekoppelt ist, mit einer zweiten Musterleistung von einer zweiten Objektleistungsversorgung (324), wobei die zweite Objektleistungsversorgung mit dem zweiten Objektgehäuse gekoppelt ist und elektronisch mit der zweiten Objektsteuerschaltung gekoppelt ist, wobei die zweite Quelle unsichtbaren Lichts mit dem zweiten Objektgehäuse gekoppelt ist und elektronisch mit der ersten Objektsteuerschaltung gekoppelt ist;
Emittieren zweiten unsichtbaren Lichts (329) von der zweiten Quelle unsichtbaren Lichts, wobei das zweite unsichtbare Licht einem zweiten Identifikationsmuster entspricht, wobei die zweite Musterleistung dem zweiten Identifikationsmuster entspricht, wobei sich das zweite Identifikationsmuster von dem ersten Identifikationsmuster unterscheidet, wobei die zweite Quelle unsichtbaren Lichts mehrere Emitter unsichtbaren Lichts umfasst;
wobei ein zweites undurchlässiges Substrat (326) mit dem zweiten Objektgehäuse gekoppelt ist, wobei das zweite undurchlässige Substrat eine Einfassung bildet, innerhalb derer sich die zweite Quelle unsichtbaren Lichts befindet, und eine Mehrzahl von Öffnungen auf verschiedenen Seiten der Einfassung definiert, durch die das zweite unsichtbare Licht hindurchtreten kann; und
wobei ein zweites durchlässiges Substrat (317) mit dem zweiten undurchlässigen Substrat gekoppelt ist, wobei das zweite durchlässige Substrat für unsichtbares Licht durchlässig ist, wobei das zweite durchlässige Substrat die Integrität des zweiten undurchlässigen Substrats aufrechterhält und eine Schutzschicht über den mehreren Öffnungen bildet, die durch das zweite undurchlässige Substrat definiert sind;
Erfassen des ersten unsichtbaren Lichts durch einen Sensor (307) für unsichtbares Licht, der mit einem Vorrichtungsgehäuse (302) einer Vorrichtung (301) gekoppelt ist;
Erkennen des ersten Identifikationsmusters des ersten unsichtbaren Lichts durch eine Vorrichtungssteuerschaltung, die mit dem Vorrichtungsgehäuse gekoppelt ist und elektronisch mit dem Sensor für unsichtbares Licht gekoppelt ist;
Bestimmen eines ersten eindeutigen Identifikators basierend auf dem ersten Identifikationsmuster durch die Vorrichtungssteuerschaltung;
Erfassen des zweiten unsichtbaren Lichts durch den Sensor für unsichtbares Licht, der mit dem Vorrichtungsgehäuse der Vorrichtung gekoppelt ist;
Erkennen des zweiten Identifikationsmusters des zweiten unsichtbaren Lichts durch die Vorrichtungssteuerschaltung, die mit dem Vorrichtungsgehäuse gekoppelt ist und elektronisch mit dem Sensor für unsichtbares Licht gekoppelt ist; und
Bestimmen eines zweiten eindeutigen Identifikators basierend auf dem zweiten Identifikationsmuster durch die Vorrichtungssteuerschaltung,
wobei das erste Identifikationsmuster eine erste sequenzierte pulsierende Emission unsichtbaren Lichts umfasst, die erste Musterleistung eine erste sequenzierte Pulsleistung umfasst, das zweite Identifikationsmuster eine zweite sequenzierte pulsierende Emission unsichtbaren Lichts umfasst und die zweite Musterleistung eine zweite sequenzierte Pulsleistung umfasst.

6. Verfahren nach Anspruch 5, ferner umfassend:
Versorgen einer dritten Quelle unsichtbaren Lichts durch eine dritte Objektsteuerschaltung, die mit einem dritten Objektgehäuse eines dritten Objekts gekoppelt ist, mit einer dritten Musterleistung von einer dritten Objektleistungsversorgung, wobei die dritte Objektleistungsversorgung mit dem dritten Objektgehäuse gekoppelt ist und elektronisch mit der dritten Objektsteuerschaltung gekoppelt ist, wobei die dritte Quelle unsichtbaren Lichts mit dem dritten Objektgehäuse gekoppelt ist und elektronisch mit der dritten Objektsteuerschaltung gekoppelt ist;
Emittieren dritten unsichtbaren Lichts von der dritten Quelle unsichtbaren Lichts, wobei das dritte unsichtbare Licht einem dritten Identifikationsmuster entspricht,
wobei die dritte Musterleistung dem dritten Identifikationsmuster entspricht, wobei sich das dritte Identifikationsmuster von dem zweiten Identifikationsmuster und dem ersten Identifikationsmuster unterscheidet;
Erfassen des dritten unsichtbaren Lichts durch den Sensor für unsichtbares Licht, der mit dem Vorrichtungsgehäuse der Vorrichtung gekoppelt ist;
Erkennen des dritten Identifikationsmusters des dritten unsichtbaren Lichts durch die Vorrichtungssteuerschaltung, die mit dem Vorrichtungsgehäuse gekoppelt ist und elektronisch mit dem Sensor für unsichtbares Licht gekoppelt ist; und
Bestimmen eines dritten eindeutigen Identifikators basierend auf dem ersten Identifikationsmuster durch die Vorrichtungssteuerschaltung.

7. Verfahren nach Anspruch 5, wobei die erste Quelle unsichtbaren Lichts einen ersten Infrarotlichtemitter umfasst, Material des ersten undurchlässigen Substrats für Infrarotlicht undurchlässig ist, das von dem ersten Infrarotlichtemitter emittiert wird, die zweite Quelle unsichtbaren Lichts einen zweiten Infrarotlichtemitter umfasst und Material des zweiten undurchlässigen Substrats für Infrarotlicht undurchlässig ist, das von dem zweiten Infrarotlichtemitter emittiert wird, und wobei optional der erste Infrarotlichtemitter eine erste Infrarot-Leuchtdiode umfasst, und der zweite Infrarotlichtemitter eine zweite Infrarot-Leuchtdiode umfasst.

## Revendications

1. Système de détection d'identifiant unique comprenant :
un premier objet (311) comprenant un premier boîtier d'objet (312) ;
une première source de lumière invisible (313) couplée au premier boîtier d'objet et configurée pour émettre une première lumière invisible (319) correspondant à un premier motif d'identification, la première source de lumière invisible comprenant une pluralité d'émetteurs de lumière invisible ;
une première alimentation électrique d'objet (314) couplée au premier boîtier d'objet ;
un premier circuit de commande d'objet (315) couplé au premier boîtier d'objet, le premier circuit de commande d'objet étant couplé électroniquement à la première source de lumière invisible et à la première alimentation électrique d'objet, le premier circuit de commande d'objet étant configuré pour fournir une première puissance de motif à partir de la première alimentation électrique d'objet à la première source de lumière invisible, la première puissance de motif correspondant au premier motif d'identification ;
un premier substrat opaque (316) couplé au premier boîtier d'objet, le premier substrat opaque formant une enceinte à l'intérieur de laquelle réside la première source de lumière invisible, et définissant une pluralité d'ouvertures sur différents côtés de l'enceinte à travers lesquelles la première lumière invisible peut passer ;
un premier substrat transparent (317) couplé au premier substrat opaque, le premier substrat transparent étant transparent à la lumière invisible, le premier substrat transparent maintenant l'intégrité du premier substrat opaque et formant une couche protectrice sur la pluralité d'ouvertures sur différents côtés de l'enceinte définie par le premier substrat opaque ;
un deuxième objet (321) comprenant un deuxième boîtier d'objet (322) ;
une deuxième source de lumière invisible (323) couplée au deuxième boîtier d'objet et configurée pour émettre une deuxième lumière invisible (329) correspondant à un deuxième motif d'identification, le deuxième motif d'identification étant distinct du premier motif d'identification, et la deuxième source de lumière invisible comprenant une pluralité d'émetteurs de lumière invisible ;
une deuxième alimentation électrique d'objet (324) couplée au deuxième boîtier d'objet ;
un deuxième circuit de commande d'objet (325) couplé au deuxième boîtier d'objet, le deuxième circuit de commande d'objet étant couplé électroniquement à la deuxième source de lumière invisible et à la deuxième alimentation électrique d'objet, le deuxième circuit de commande d'objet étant configuré pour fournir une deuxième puissance de motif à partir de la deuxième alimentation électrique d'objet à la deuxième source de lumière invisible, la deuxième puissance de motif correspondant au deuxième motif d'identification ;
un deuxième substrat opaque (326) couplé au deuxième boîtier d'objet, le deuxième substrat opaque formant une enceinte à l'intérieur de laquelle réside la deuxième source de lumière invisible, et définissant une pluralité d'ouvertures à travers lesquelles la deuxième lumière invisible peut passer ;
un deuxième substrat transparent (317) couplé au deuxième substrat opaque, le deuxième substrat transparent étant transparent à la lumière invisible, le deuxième substrat transparent maintenant l'intégrité du deuxième substrat opaque et formant une couche protectrice sur la pluralité d'ouvertures définies par le deuxième substrat opaque ;
un dispositif (301) comprenant un boîtier de dispositif (302) ;
un capteur de lumière invisible (307) couplé au boîtier de dispositif et configuré pour détecter la première lumière invisible et pour détecter la deuxième lumière invisible ; et
un circuit de commande de dispositif (305) couplé au boîtier de dispositif et couplé électroniquement au capteur de lumière invisible, le circuit de commande de dispositif étant configuré pour détecter le premier motif d'identification de la première lumière invisible et pour déterminer un premier identifiant unique d'objet sur la base du premier motif d'identification, et étant configuré pour détecter le deuxième motif d'identification de la deuxième lumière invisible et pour déterminer un deuxième identifiant unique d'objet sur la base du deuxième motif d'identification,
le premier motif d'identification comprenant une première émission de lumière invisible pulsée séquencée, la première puissance de motif comprenant une première puissance pulsée séquencée, le deuxième motif d'identification comprenant une deuxième émission de lumière invisible pulsée séquencée, et la deuxième puissance de motif comprenant une deuxième puissance pulsée séquencée.

2. Système selon la revendication 1, le premier motif d'identification comprenant les premiers signaux de communication optique, la première puissance de motif comprenant la première puissance de signalisation de communication optique, le deuxième motif d'identification comprenant les deuxièmes signaux de communication optique, et la deuxième puissance de motif comprenant la deuxième puissance de signalisation de communication optique.

3. Système selon la revendication 1, la première source de lumière invisible comprenant un premier émetteur de lumière infrarouge, et la deuxième source de lumière invisible comprenant un deuxième émetteur de lumière infrarouge, et éventuellement le premier émetteur de lumière infrarouge comprenant une première diode électroluminescente infrarouge, et le deuxième émetteur de lumière infrarouge comprenant une deuxième diode électroluminescente infrarouge.

4. Système selon la revendication 1, le premier motif d'identification comprenant un premier motif de marqueur de repère, le circuit de commande de dispositif étant configuré pour déterminer un premier début du premier motif d'identification sur la base du premier motif de marqueur de repère, le deuxième motif d'identification comprenant un deuxième motif de marqueur de repère, et le circuit de commande de dispositif étant configuré pour déterminer un deuxième début du deuxième motif d'identification sur la base du deuxième motif de marqueur de repère.

5. Procédé de détection d'identifiant unique, comprenant :
la fourniture, par un premier circuit de commande d'objet (315) couplé à un premier boîtier d'objet (312) d'un premier objet (311), d'une première puissance de motif à partir d'une première alimentation électrique d'objet à une première source de lumière invisible (313),
la première alimentation électrique d'objet étant couplée au premier boîtier d'objet et couplée électroniquement au premier circuit de commande d'objet, la première source de lumière invisible étant couplée au premier boîtier d'objet et couplée électroniquement au premier circuit de commande d'objet ;
l'émission d'une première lumière invisible (319) à partir de la première source de lumière invisible, la première lumière invisible correspondant à un premier motif d'identification, la première puissance de motif correspondant au premier motif d'identification, la première source de lumière invisible comprenant une pluralité d'émetteurs de lumière invisible ;
un premier substrat opaque (316) étant couplé au premier boîtier d'objet, le premier substrat opaque formant une enceinte à l'intérieur de laquelle réside la première source de lumière invisible, et définissant une pluralité d'ouvertures sur différents côtés de l'enceinte à travers lesquelles la première lumière invisible peut passer ; et
un premier substrat transparent (317) étant couplé au premier substrat opaque, le premier substrat transparent étant transparent à la lumière invisible, le premier substrat transparent maintenant l'intégrité du premier substrat opaque et formant une couche protectrice sur la pluralité d'ouvertures définies par le premier substrat opaque ;
la fourniture, par un deuxième circuit de commande d'objet (325) couplé à un deuxième boîtier d'objet (322) d'un deuxième objet (321), d'une deuxième puissance de motif à partir d'une deuxième alimentation électrique d'objet (324) à une deuxième source de lumière invisible (323), la deuxième alimentation électrique d'objet étant couplée au deuxième boîtier d'objet et couplée électroniquement au deuxième circuit de commande d'objet, la deuxième source de lumière invisible étant couplée au deuxième boîtier d'objet et couplée électroniquement au deuxième circuit de commande d'objet ;
l'émission d'une deuxième lumière invisible (329) à partir de la deuxième source de lumière invisible, la deuxième lumière invisible correspondant à un deuxième motif d'identification, la deuxième puissance de motif correspondant au deuxième motif d'identification, le deuxième motif d'identification étant distinct du premier motif d'identification, la deuxième source de lumière invisible comprenant une pluralité d'émetteurs de lumière invisible ;
un deuxième substrat opaque (326) étant couplé au deuxième boîtier d'objet, le deuxième substrat opaque formant une enceinte à l'intérieur de laquelle réside la deuxième source de lumière invisible, et définissant une pluralité d'ouvertures sur différents côtés de l'enceinte à travers lesquelles la deuxième lumière invisible peut passer ; et
un deuxième substrat transparent (317) étant couplé au deuxième substrat opaque, le deuxième substrat transparent étant transparent à la lumière invisible, le deuxième substrat transparent maintenant l'intégrité du deuxième substrat opaque et formant une couche protectrice sur la pluralité d'ouvertures définies par le deuxième substrat opaque ;
la détection de la première lumière invisible par un capteur de lumière invisible (307) couplé à un boîtier de dispositif (302) d'un dispositif (301) ;
la détection du premier motif d'identification de la première lumière invisible par un circuit de commande de dispositif couplé au boîtier de dispositif et couplé électroniquement au capteur de lumière invisible ;
la détermination d'un premier identifiant unique basé sur le premier motif d'identification par le circuit de commande de dispositif ;
la détection de la deuxième lumière invisible par le capteur de lumière invisible couplé au boîtier de dispositif du dispositif ;
la détection du deuxième motif d'identification de la deuxième lumière invisible par le circuit de commande de dispositif couplé au boîtier de dispositif et couplé électroniquement au capteur de lumière invisible ; et la détermination d'un deuxième identifiant unique basé sur le deuxième motif d'identification par le circuit de commande de dispositif,
le premier motif d'identification comprenant une première émission de lumière invisible pulsée séquencée, la première puissance de motif comprenant une première puissance pulsée séquencée, le deuxième motif d'identification comprenant une deuxième émission de lumière invisible pulsée séquencée, et la deuxième puissance de motif comprenant une deuxième puissance pulsée séquencée.

6. Procédé selon la revendication 5, comprenant en outre :
la fourniture, par un troisième circuit de commande d'objet couplé à un troisième boîtier d'objet d'un troisième objet, d'une troisième puissance de motif à partir d'une troisième alimentation électrique à une troisième source de lumière invisible, la troisième alimentation électrique étant couplée au troisième boîtier d'objet et couplée électroniquement au troisième circuit de commande d'objet, la troisième source de lumière invisible étant couplée au troisième boîtier d'objet et couplée électroniquement au troisième circuit de commande d'objet ;
l'émission d'une troisième lumière invisible à partir de la troisième source de lumière invisible, la troisième lumière invisible correspondant à un troisième motif d'identification, la troisième puissance de motif correspondant au troisième motif d'identification, le troisième motif d'identification étant distinct du deuxième motif d'identification et du premier motif d'identification ;
la détection de la troisième lumière invisible par le capteur de lumière invisible couplé au boîtier de dispositif du dispositif ;
la détection du troisième motif d'identification de la troisième lumière invisible par le circuit de commande de dispositif couplé au boîtier de dispositif et couplé électroniquement au capteur de lumière invisible ; et
la détermination d'un troisième identifiant unique basé sur le premier motif d'identification par le circuit de commande de dispositif.

7. Procédé selon la revendication 5, la première source de lumière invisible comprenant un premier émetteur de lumière infrarouge, un matériau du premier substrat opaque étant opaque à la lumière infrarouge émise par le premier émetteur de lumière infrarouge, la deuxième source de lumière invisible comprenant un deuxième émetteur de lumière infrarouge, et un matériau du deuxième substrat opaque étant opaque à la lumière infrarouge émise par le deuxième émetteur de lumière infrarouge, et éventuellement le premier émetteur de lumière infrarouge comprenant une première diode électroluminescente infrarouge, et le deuxième émetteur de lumière infrarouge comprenant une deuxième diode électroluminescente infrarouge.
